(19) Europäisches Patentamt

European Patent Office

Office européen des brevets

(11) **EP 0 727 748 A1**

(12) **EUROPÄISCHE PATENTANMELDUNG**

(43) Veröffentlichungstag:
 21.08.1996 Patentblatt 1996/34

(51) Int. Cl.⁶: **G06F 15/80**

(21) Anmeldenummer: 95102265.6

(22) Anmeldetag: 17.02.1995

(84) Benannte Vertragsstaaten:
 AT BE CH DE DK ES FR GB GR IE IT LI LU MC NL PT SE

(71) Anmelder: **BODAMER, Edgar**
 **D-81375 München (DE)**

(72) Erfinder: **BODAMER, Edgar**
 **D-81375 München (DE)**

(54) **Verfahren und Anordnung zum mehrstufigen unüberwachten Lernen unter Verwendung einer Hierarchie von neuronalen Netzen**

(57) Verbesserung des bisher bekannten Verfahrens zum unüberwachten Lernen bei neuronalen Netzen, bei dem das unüberwachte Erlernen der Aufteilung der Eingabemuster in Klassen in nur einer Neuronenschicht abläuft, durch Verwendung einer Hierarchie von unüberwacht lernenden neuronalen Netzen, wobei einfache Teilmuster eines Gesamt-Eingabemusters auf unteren Stufen klassifiziert werden. Diese Klassifizierungsergebnisse werden auf höheren Stufen kombiniert und so das Gesamt-Eingabemuster klassifiziert.

Dadurch wird bei komplexen Mustererkennungsaufgaben eine bessere Erkennungsleistung evtl. sogar bei geringerem Rechenaufwand erzielt.

Dieses Verfahren kann unter anderem zur Klassifizierung von optischen oder akustischen Eingabemustern, zur Bilderkennung, Spracherkennung, Bildkomprimierung und Zeitreihenanalyse verwendet werden kann.

FIG 1

EP 0 727 748 A1

**Beschreibung**

Die Erfindung betrifft ein Verfahren zum mehrstufigen unüberwachten Lernen unter Verwendung einer Hierarchie von neuronalen Netzen, das unter anderem zur Klassifizierung von optischen oder akustischen Eingabemustern, zur Bilderkennung, Spracherkennung, Bildkomprimierung und Zeitreihenanalyse verwendet werden kann.

Bisher bekannt ist das einstufige unüberwachte Lernen bei neuronalen Netzen, z.B. "Competitive Learning" oder das Kohonen-Netz, wobei das unüberwachte Lernen der Aufteilung der Eingabemuster in Klassen in nur einer Neuronenschicht abläuft. Zur Erkennung eines Eingabemusters wird in dieser Neuronenschicht nur ein Neuron ausgewählt, und zwar das, bei dem die Einabegewichte die höchste Übereinstimmung mit dem Eingabemuster erreichen und welches deshalb am stärksten erregt wird. Nur dies Neuron bestimmt den Ausgabewert. Jedes Neuron dieser Neuronenschicht erlernt das Erkennen einer bestimmten Klasse von untereinander ähnlichen Mustern. Beim Kohonennetz wird durch den Lernvorgang zusätzlich erreicht, daß in der Neuronenschicht benachbarte Neuronen ähnliche Eingabemuster erkennen.

Für die Erzeugung der Ausgabe- Information kann eine weitere Neuronenschicht verwendet werden (z.B. beim Counter-Propagation-Netzwerk), bei dieser Schicht wird jedoch das überwachte Lernen verwendet, es werden also für jedes zu erlernende Eingabemuster die zugehörigen Ausgabewerte angegeben.

Die Anwendung solch eines einstufigen unüberwacht lernenden Netzes für die
Bildkomprimierung wird z.B. in dem französigchen Patent WO 91/08546 PCT/FR90/00888 Classification G06F 15/64 beschrieben.

Nachteile des einstufigen unüberwachten Lernens: Einfache Muster (die z.B. nur aus Komponenten komplexer Muster bestehen) werden auf der gleichen Neuronenschicht klassifiziert wie komplexe Muster. Deshalb können verschiedene Komponenten eines Musters nicht für sich identifiziert werden sondern nur als gesamtes Muster. Befinden sich in einem Eingabemuster mehrere Komponenten, die nicht zu einem Ganzen zusammengehören, (z.B. wahllos verstreute Teile) so ist eine Erkennung der einzelnen Komponenten für sich nicht möglich.

Wird keine geeignete Vorverarbeitung des (z.B. räumlichen oder zeitlichen) Eingabemusters vorgenommen, so kann ein z.B. räumlich leicht verschobenes Eingabemuster einen völlig anderen Eingabevektor darstellen und dadurch ein ganz anderes Neuron in der Neuronenschicht am stärksten erregt werden. Dies hat zur Folge, daß gleiche Muster, die sich jedoch in ihrer Position leicht unterscheiden, dann völlig anderen Klassen zugeordnet sein können.

Aufgabe der Erfindung ist es daher, ein Verfahren und eine entsprechend arbeitende Anordnung zu schaffen, womit mehrstufiges unüberwachtes Lernen ermöglicht wird. Dabei werden einfache Teilmuster eines Gesamt-Eingabemusters auf uneren Stufen klassifiziert. Diese Klassifizierungsergebnisse werden auf höheren Stufen kombiniert und so werden komplexere Teil-Muster oder das Gesamt-Muter klassifiziert, wobei jede Stufe unüberwacht lernt.

Weitere Vorteile des mehrstufigen unüberwachten Lernens nach diesem Verfahren: Gehören die auf unteren Stufen klassifizierten Komponenten nicht zu einem komplexeren Ganzen zusammen, das bereits erlernt worden ist, do kann kein Gesamtmuster klassifiziert werden. In diesem Fall kann die Ausgabe der Klassifizierungsergebnisse auf den unteren Stufen erfolgen, also die Klassifizierung der Komponenten ausgegeben werden. Dies kann z.B. bei der Bildkomprimierung verwendet werden, indem bei der Verarbeitung eines Bildausschnitts darin enthaltene Komponenten für sich auf unteren Stufen der Netzhierarchie erkannt werden und die Nummern der maximal erregten Neuronen auf diesen Stufen als Komprimierungsergebnis ausgegeben werden.

Beim einstufigen unüberwachten Lernen wird oft eine Vorverarbeitung durchgeführt, die Eigenschaften des Eingabemusters bzw. Komponenten erkennt und diese zur Weiterverarbeitung an das neuronale Netz überträgt. Diese Vorverarbeitung kann beim mehrstufigen unüberwachen Lernen auf den unteren Stufen (unter Anwendung unüberwachten Lernens) durchgeführt werden.

Es sind wesentlich weniger Eingangsgewichte bei den Neuronen erforderlich, da auf den unteren Stufen die Informationen stark zusammengefaßt werden.

Die Ermittlung des am stärksten erregten Neurons (auf oberster Stufe), also die Klassifizierung des Eingabemusters, kann schneller durchgeführt werden.

Beim Erlernen, Komponenten von Eingabemustern zu klassifizieren, können Komponenten, die der selben Klasse zugeordnet werden, (bei optischen Mustern z.B. gerade Linien,) Teile völlig unterschiedlicher Muster sein. Dies ist beim Erlernen, die Komponenten zu klassifizieren, von großem Vorteil, da jedes Eingabemuster aus mehreren Komponenten bestehen kann, deren Klassifizierung erlernt wird und daher für das Erlernen, diese Komponenten zu klassifizieren, weniger unterschiedliche Eingabemuster erforderlich sind als beim einstufigen unüberwachten Lernen.

Gleiche Teilmuster, die nur einen kleinen Positionsunterschied aufweisen, können der gleichen Klasse zugeordnet werden und damit schon auf unteren Ebenen als ähnlich erkannt werden. (Siehe Erweiterung des Verfahrens.) Dadurch reduziert sich die Anzahl erforderlicher Klassen auf höheren Stufen enorm.

Es folgt eine Kurzbeschreibung der Abbildungen, die zur näheren Erläuterung dieser Erfindung verwendet werden:
Im einzelnen zeigen

FIG 1

eine Hierarchie von neuronalen Netzen,

FIG 2

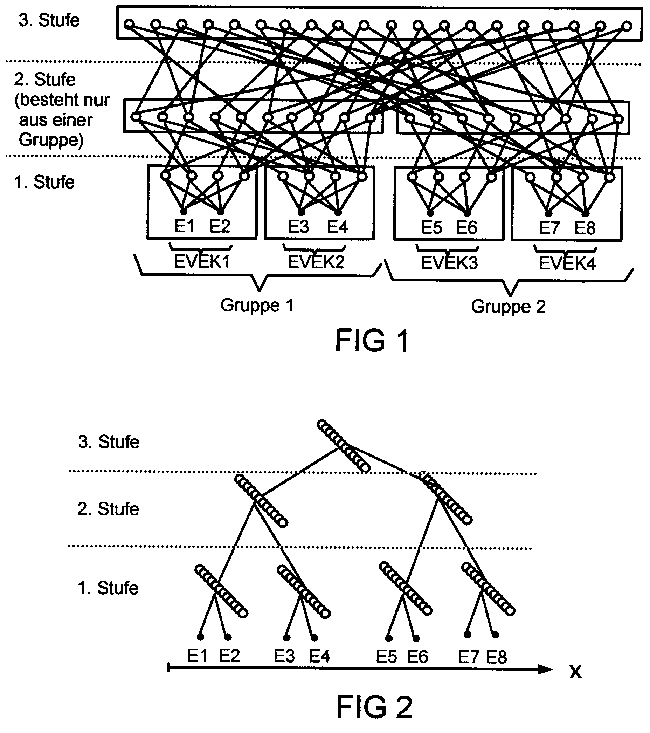

die gleiche Hierarchie von neuronalen Netzen wie in FIG 1, jedoch in abstrakter Form dargestellt,

FIG 3

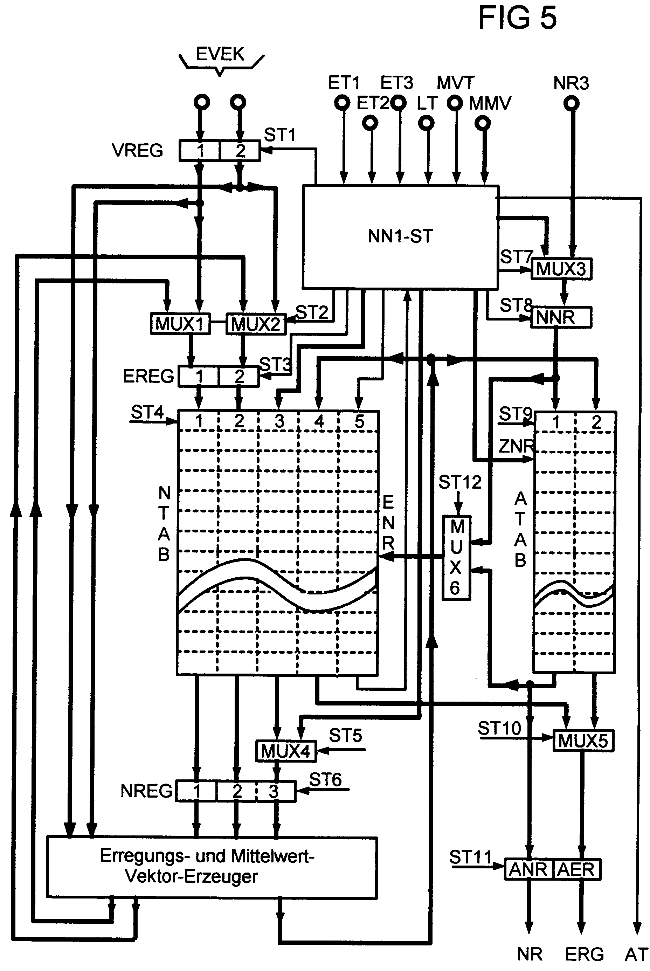

eine Hierarchie von neuronalen Netzen in abstrakter Form dargestellt, wie sie zur Analyse von optischen Mustern verwendet werden kann,

FIG 4

eine Erweiterung der in FIG 2 abgebildeten Netzhierarchie, mit der auch Muster klassifiziert werden können, wenn sie gegenüber dem Referenzmuster leicht verschoben sind,

FIG 5

eine Schaltungsanordnung für ein neuronales Netz auf unterster Stufe der Netzhierarchie des Ausführungsbeispiels,

FIG 6

eine Schaltungsanordnung für den in FIG 5 verwendeten Erregungs- und Mittelwert-Vektor-Erzeuger,

FIG 7

eine Schaltungsanordnung für ein neuronales Netz ab der zweiten Stufe der Netzhierarchie des Ausführungsbeispiels,

FIG 8

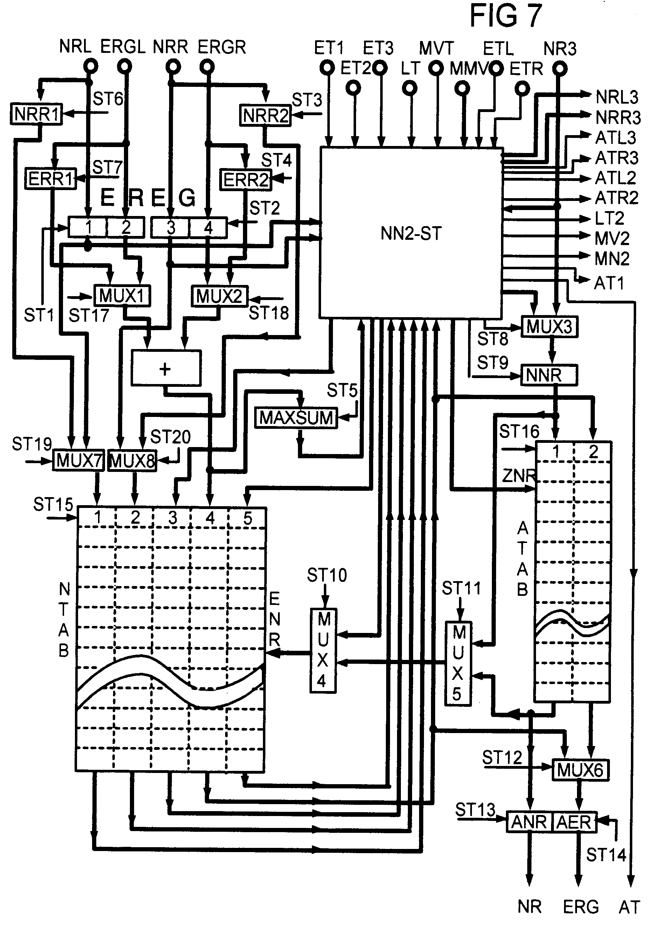

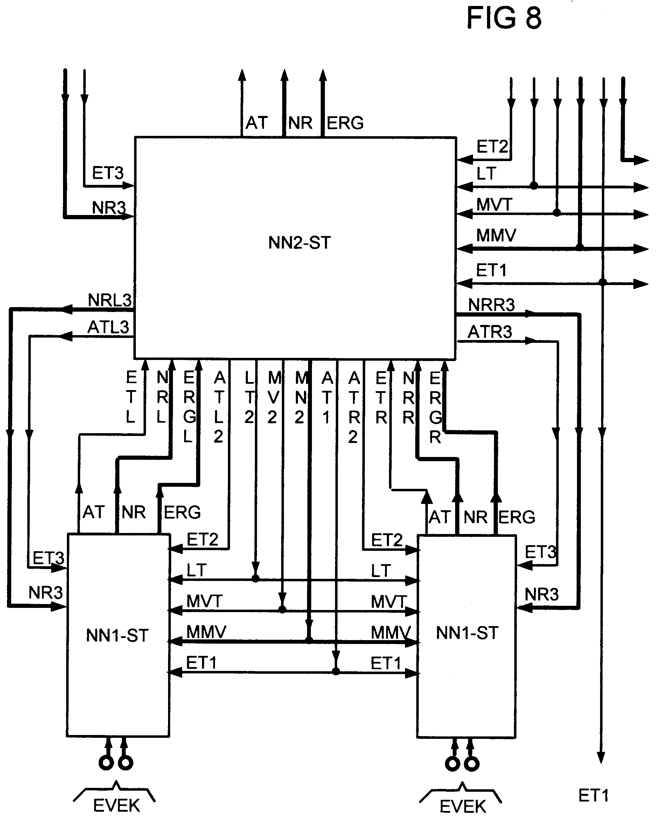

die Verbindungen zwischen den Netzen der Netz-Hierarchie des Ausführungsbeispiels,

FIG 9A und FIG 9B

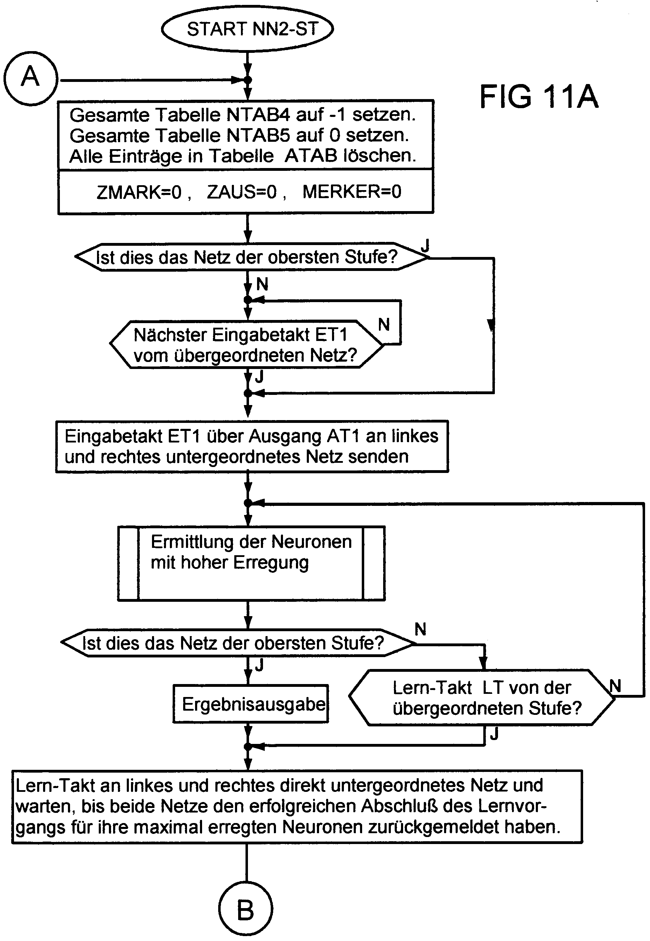

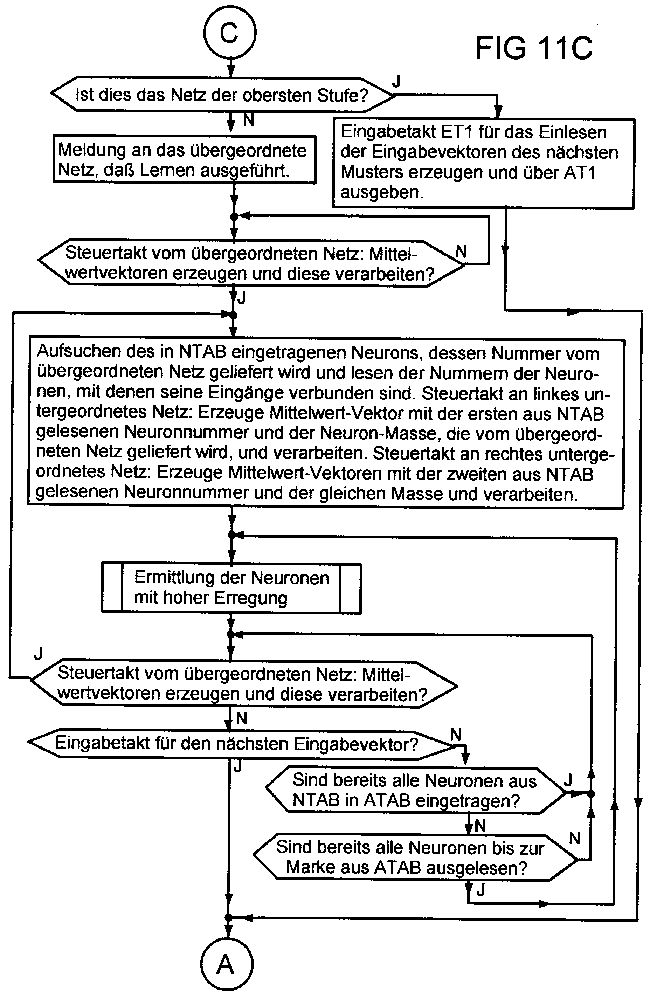

ein Flußdiagramm für den Steuerungsablauf der in FIG 5 gezeigten Schaltungsanordnung,

FIG 10

ein Flußdiagramm für die Ausgabesteuerung der in FIG 5 gezeigten Schaltungsanordnung,

FIG 11A bis FIG 11C

ein Flußdiagramm für den Steuerungsablauf der in FIG 7 gezeigten Schaltungsanordnung,

FIG 12A bis FIG 12D

ein Flußdiagramm für den Steuerungsablauf zur Ermittlung der Neuronen mit hoher Erregung, der innerhalb des in FIG 11A bis 11C beschiebenen Steuerungsablaufs aufgerufen wird,

FIG 13

ein Flußdiagramm für die Ausgabesteuerung der in FIG 7 gezeigten Schaltungsanordnung.

Bei diesem Verfahren zum mehrstufigen unüberwachten Lernen besteht jede Stufe aus einem oder mehreren neuronalen Netzen, wobei jedes Netz aus einer Neuronenschicht besteht, die unüberwacht lernt. Die Ausgänge jeweils zweier oder mehrerer neuronaler Netze auf einer unteren Stufe dienen als Eingänge jeweils eines Netzes auf der darüberliegenden Stufe. Insgesamt ergibt sich so eine Hierarchie von neuronalen Netzen.

Das Gesamt-Eingabemuster ist in zusammenhängende Teile aufgeteilt, die als Eingabevektoren für die einzelnen neuronalen Netze der untersten Stufe der Gesamt-Hierarchie verwendet werden. Die Netze jeder Stufe sind in Netzgruppen aufgeteilt, wobei aufeinanderfolgende Netze innerhalb einer Netzgruppe der ersten Stufe aufeinanderfolgende Teile des Gesamt-Eingabemusters verarbeiten. Jeder Netzgruppe ist ein eigenes Netz in der darüberliegenden Stufe zugeordnet, bei jedem Neuron in solch einem zugeordneten Netz ist sein 1. Eingang mit dem Ausgang eines Neurons des 1. Netzes in der Netzgruppe verbunden, sein 2. Eingang ist mit dem Ausgang eines Neurons des 2. Netzes in der Netzgruppe verbunden, usw.. Sein letzter Eingang ist mit dem Ausgang eines Neurons des letzten Netzes in der Netzgruppe verbunden. Ein Beispiel ist in FIG 1 dargestellt. E1 bis E8 sind die Eingänge, EVEK1 bis EVEK4 sind die Eingabevektoren für die Netze der untersten Stufe. FIG 2 zeigt eine Abstraktion von FIG 1, in der bei jedem Netz nur für ein Neuron dessen Eingänge (stellvertretend für alle anderen) eingezeichnet sind.

Die Netze der untersten Stufe sind folgendermaßen aufgebaut: Die Neuronen haben Eingangewichte W z.B. im Wertebereich von 0 bis 1 und Eingabewerte X z.B. ebenfalls im Wertebereich von 0 bis 1, wobei die Erregung bei einem Neuron mit n Eingängen um so höher ist, je höher die Übereinstimmung der Eingabewerte X mit den Eingangangsgewichten W ist. Für die oben gewählten Beispiel- Wertebereiche wird die Erregung eines Neurons nach der Formel

$$(1 - //W1-X1//) + (1 - //W2-X2//) + ... + (1 - //Wn-Xn//)$$

berechnet. (//...// bedeutet der Betrag.)

Diese Formel kann vereinfacht in folgender Form geschrieben werden:

$$n - //W1-X1// - //W2-X2// - ... - //Wn-Xn//$$

Dabei ist die maximale Erregung eines Neurons mit n Eingängen der Wert n, nämlich dann, wenn die Eingabewerte X mit den Eingangsgewichten W übereinstimmen.

Die Neuronen der untersten Stufe können auch nur einen Eingang besitzen.

Die Erregung eines Neurons auf höherer Stufe ergibt sich aus der Summe seiner Eingangswerte. (Es ist also kein Eingangsgewicht erforderlich.)

Jedem Neuron eines Netzes höherer Stufe ist eindeutig eine Gruppe von Gewichtsvektoren von Neuronen auf der untersten Stufe zugeordnet, deren Ausgänge direkt oder indirekt über Neuronen darüberliegender Stufen mit den Eingängen dieses Neurons auf höherer Stufe verbunden sind. Diese Gruppe von Gewichtsvektoren entsprich einem (Teil-)Eingabemuster, das quasi durch dieses Neuron auf höherer Stufe repräsentiert wird.

Jedem Neuron wird eine Masse zugeordnet, die ein Maß dafür darstellt, wie oft ein Neuron bei der Verarbeitung eines Eingabemusters bereits gefeuert hat. Je höher die Masse eines Neurons ist, desto geringer ist die Änderung seiner Eingabegewichte beim Lernvorgang. Mit der Zeit wird dadurch ein relativ stabiler Zustand der Eingabegewichte der Neuronen erreicht.

Alle Netze der gesamten Hierarchie sind dynamisch veränderlich, d.h. in jedes Netz können Neuronen hinzugefügt werden, es können Neuronen gelöscht oder mit anderen Neuronen zusammengefaßt werden. Dies geschieht bei der Verarbeitung von Eingabemustern während der Lernphase. An die Lernphase kann sich eine Phase der reinen Muster-Klassifizierung anschließen, bei der kein Lernen (wie das Anpassen der Gewichtsvektoren) mehr stattfindet.

Zu Beginn der Lernphase, in der eine vorgegebene Anzahl von Beispiel-Eingabemustern verarbeitet wird, werden die Netze der Hierarchie erst mit Neuronen gefüllt, beginnend auf der untersten Stufe.

Für die Netze der untersten Stufe gilt für die Lernphase: Ein neues Neuron wird in ein Netz eingefügt, wenn das Netz einen Eingabevektor verarbeitet und wenn dabei das Netz noch keine Neuronen enthält oder wenn das Neuron dieses Netzes mit der maximalen Erregung einen für jede Stufe festgelegten Erregungsschwellwert nicht überschreitet (z.B. 90% des für diese Stufe maximalen Erregungswertes). Als Gewichtsvektor wird dem eingefügten Neuron der Eingabevektor für dieses Netz zugeordnet.

Bei der Bedingung für das Einfügen eines Neurons kann auch die Masse des Neurons mit der maximalen Erregung berücksichtigt werden, indem der Mindest-Erregungswert bei einem hohen Verhältnis der Masse dieses Neurons zur Gesamtmasse dieses Netzes erhöht wird. Dies bewirkt eine feinere Aufteilung in Ähnlichkeitsklassen bei Eingabevektoren, die relativ häufig auftreten.

Der Gewichtsvektor eines Neurons wird verändert, wenn bei der Verarbeitung eines Eingabevektors kein neues Neuron in das Netz eingefügt wird. Es wird das Neuron mit der höchsten Erregung innerhalb dieses Netzes ausgewählt. Der neue Gewichtsvektor für das ausgewählte Neuron ergibt sich aus dem entsprechend ihrer Massen gewichteten Mittelwert des Gewichtsvektors des Neurons und des Eingabevektors. (Der Eingabevektor hat die Masse 1.) Die Masse des ausgewählten Neurons wird anschließend um 1 erhöht.

Für die Netze höherer Stufe gilt für die Lernphase: Ein neues Neuron wird in ein Netz eingefügt, wenn das Netz Erregungswerte von Neuronen der darunterliegenden Schicht verarbeitet und wenn dabei das Netz noch keine Neuronen enthält oder wenn bei dem am stärksten erregten Neuron dieses Netzes der für jede Stufe festgelegte Erregungsschwellwert unterschritten wird. Der erste Eingang des eingefügten Neurons wird mit dem Ausgang des Neurons des ersten Netzes der zugeordneten Netzgruppe auf der darunterliegenden Stufe verbunden, das innerhalb seiner Schicht am stärksten erregt ist. Der zweite Eingang des eingefügten Neurons wird mit dem Ausgang des Neurons des zweiten Netzes der zugeordneten netzgruppe auf der darunterliegenden Stufe verbunden, das innerhalb seiner Schicht am stärksten erregt ist, usw..

Verarbeitet ein Netz Erregungswerte von Neuronen der zugeordneten Netzgruppe der darunterliegenden Stufe und wird dabei kein Neuron in das Netz eingefügt, so lernt das am stärksten erregte Neuron dieses Netzes, indem seine Eingänge mit Ausgängen von anderen Neuronen der zugeordneten Netzgruppe der darunterliegenden Stufe verbunden werden. Dazu werden zunächst die diesem Neuron zugeordneten Gewichtsvektoren auf der untersten Stufe ermittelt und dann auf der untersten Stufe die Mittelwert-Vektoren gebildet, die sich aus dem gewichteten Mittelwert der Gewichtsvektoren und den jeweils zugehörigen Eingabevektoren ergeben. Die Gewichtsvektoren werden dabei mit dem Wert der Masse des lernenden Neurons gewichtet. Die Eingabevektoren erhalten das Gewicht 1. Die sich auf diese Weise ergebenden Mittelwert-Vektoren werden dann von den entsprechenden Netzen auch auf den höheren Stufen verarbeitet und die Eingänge des lernenden Neurons werden dann mit den Ausgängen der Neuronen der zugeordneten Netzgruppe der darunterliegenden Stufe verbunden, die jeweils innerhalb ihres Netzes am meisten erregt sind. Damit ist der Lernvorgang für dieses Neuron abgeschlossen.

Die Anzahl der Neuronen je Netz auf einer höheren Stufe der Netzhierarchie kann sehr hoch sein. Deshalb wird im folgenden ein effizientes Verfahren beschrieben, mit dem das am stärksten erregte Neuron des Netzes auf höchster Stufe ermittelt werden kann. Dabei wird eine Netzhierarchie vorausgesetzt, bei der die Ausgänge von jeweils zwei benachbarten Netzen auf einer unteren Stufe mit einem Netz auf der darüberliegenden Stufe verbunden sind, wie in FIG 1 bzw. FIG 2 abgebildet. Diese Netzhierarchie ist nicht wie dort abgebildet auf 3 Stufen beschränkt, sondern kann beliebig viele Stufen besitzen. Sie ist für die Verarbeitung von eindimensionalen Mustern geeignet, die wie in FIG 2 dargestellt nur eine Ausdehnung in x-Richtung besitzen. Dies ist z.B. bei einer zeitliche Folge von Werten wie bei der Zeitreihenanalyse oder bei der Spracherkennung der Fall. Bei der Spracherkennung wird eine Folge von n-dimensionalen Vektoren analysiert, die jeweils ein Spektrum der akustischen Frequenzverteilung beschreiben. Zur Verarbeitung dieser Vektoren benötigen die Neuronen der Netze der untersten Stufe n Eingänge, damit die Gewichte je eines Neurons einen n-dimensionalen Vektor darstellen.)

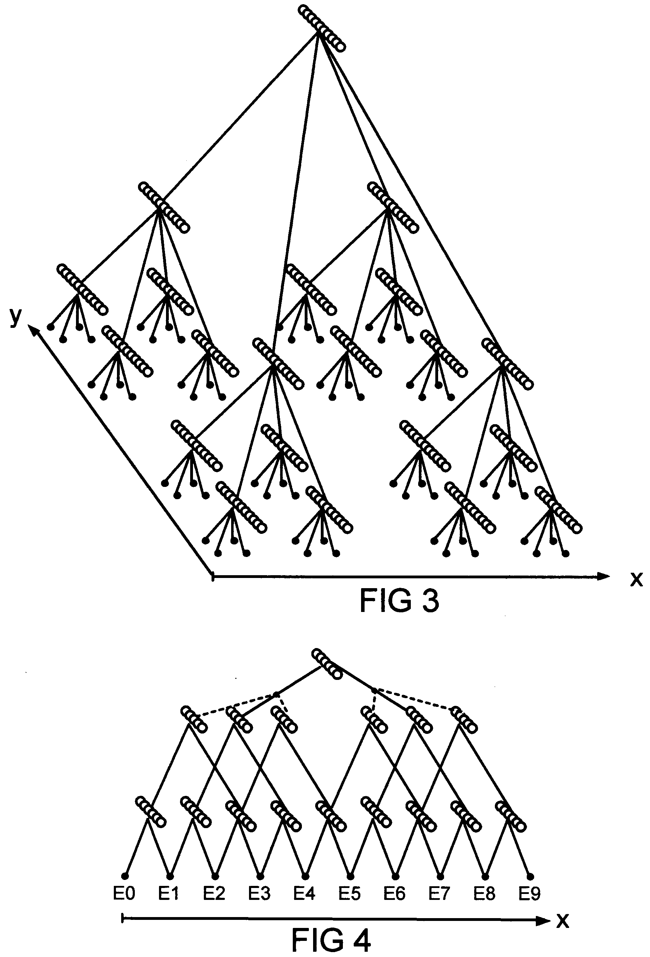

Diese Einschränkung der Netzhierarchie kann aber leicht auf eine höhere Anzahl als zwei benachbarte Netze erweitert werden, wie z.B. in FIG 3 dargestellt. Dort ist eine Netzhierarchie abgebildet, die aus 3 Stufen besteht. Sie kann jedoch durch das Anodnen von 4 solcher Netzhierarchien in quadratischer Form nebeneinander leicht auf 4 Stufen erweitert werden, indem ein Netz auf 4. Stufe hinzugefügt wird, dessen Neuroneneingänge mit Neuronen der 4 Netze auf 3. Stufe verbunden werden. Auf diese Weise kann eine Netzhierarchie, die aus beliebig vielen Stufen besteht, konstruiert werden. Sie ist für die Verarbeitung 2-dimensionaler optischer Muster geeignet ist.

Zur Verarbeitung eines Eingabemusters wird jedem Netz zu Anfang eine Ausgabetabelle (ATAB) zugeordnet, die zunächst leer ist, in die aber später Neuronen dieses Netzes eingetragen werden. Dann werden stufenweise, beginnend mit der untersten Stufe, für jedes Netz die am stärksten erregten Neuronen ermittelt und nach der Stärke der Erregung in absteigender Reihenfolge sortiert in die dem Netz zugeordnete Ausgabetabelle eingetragen. Zuerst werden die Ausgabetabellen für die Netze der untersten Stufe erstellt. Zur Ermittlung der Ausgabetabellen der Netze auf jeweils der nächsten darüberliegenden Stufe wird folgendermaßen verfahren:

Für je zwei benachbarte Netze einer Stufe, deren Ausgänge mit dem selben Netz auf der darüberliegenden Stufe verbunden sind und die im folgenden als linkes, rechtes und übergeordnetes Netz bezeich- net werden, werden die beiden zugeordneten Ausgabetabellen gleichzeitig abgearbeitet und zwar in folgenden Schritten:

A) Es wird die Ausgabetabelle vom linken und rechten Netz ausgewählt, die das Neuron mit der höchsten Erregung enthält. Dies Neuron wird aus der Tabelle entnommen.

B) Von diesem Neuron wird zu allen Neuronen im übergeordneten Netz verzweigt, die mit ihren Eingängen mit dem Ausgang dieses Neurons verbunden sind. Von diesen Neuronen im übergeordneten Netz wird dann die Erregung ermittelt, und diese Neuronen werden nach der Höhe ihrer Erregung in absteigender Reihenfolge sortiert in die ihrem Netz zugeordnete Ausgabetabelle eingetragen.

C) In Ausgabetabellen des linken und rechten untergeordneten Netzes wird jeweils das Neuron mit der höchsten Erregung, das noch nicht ausgelesen worden ist, ermittelt. Diese beiden Neuronen-Erregungen werden addiert, die sich ergebende Summe wird im folgenden mit MAXSUM bezeichnet.

Die Schritte A, B und C werden so oft wiederholt, bis MAXSUM kleiner oder gleich groß ist wie eine der bereits ermittelten Erregungen der Neuronen im übergeordneten Netz. Dann wird die Abarbeitung dieser beiden Ausgabetabellen gestoppt, jedoch später in dem Fall weitergeführt, wenn für die Ausgabetabelle des übergeordneten Netzes weitere Neuronen-Einträge benötigt werden.

In der Ausgabetabelle dieses übergeordneten Netzes, für welche nun Einträge ermittelt worden sind, wird markiert, bis zu welchem Neuroneneintrag die Erregung höher oder gleich hoch ist wie der in MAXSUM gespeicherte Wert. Die Tabelle darf später nur bis zu dieser Markierung ausgelesen und an das übergeordnete Netz übergeben werden, dann werden für sie weitere Neuroneneinträge benötigt, die wie beschrieben ermittelt und in die Tabelle einsortiert werden. Anschließend wird die Markierung neu gesetzt.

Das Neuron im Netz auf höchster Stufe mit der höchsten Erregung ist gefunden, sobald das Neuron in der diesem Netz zugeordneten Ausgabetabelle mit der höchsten Erregung eine höhere Erregung als der im zugehörigen MAXSUM gespeicherte Wert besitzt.

Im folgenden wird eine Anordnung vorgestellt, die das oben beschriebene Verfahren ausführt.

Das Blockschaltbild von FIG 5 zeigt eine Anordnung für ein neuro- nales Netz auf der 1. Stufe der Netzhierarchie. NTAB ist ein Tabellenspeicher, dessen Zeilen durch die Adresse, die an seinem Adreßeingang ENR anliegt, adressiert werden. In jeder Zeile von NTAB können Werte für ein bestimmtes Neuron gespeichert werden, dessen Nummer der Zeilennummer in NTAB entspricht. Die folgende Tabelle gibt die Neuronen-Parameter an, die in den einzelnen Spalten von NTAB gespeichert werden:

Tabelle I

| | |
|---|---|
| NTAB1 | 1. Eingangsgewicht |
| NTAB2 | 2. Eingangsgewicht |
| NTAB3 | Neuronenmasse |
| NTAB4 | Erregung des Neurons |
| NTAB5 | Sperr-Marke |

In NTAB werden alle Neuronen eines neuronalen Netzes auf der ersten Stufe gespeichert.

ATAB ist ein Tabellenspeicher, dessen Zeilen durch die Adresse, die an seinem Adreßeingang ZNR anliegt, adressiert werden. In jeder Zeile von ATAB können Werte für ein bestimmtes Neuron gespeichert werden. In der Spalte ATAB1 wird die Nummer des jeweiligen Neurons eingetragen, in Spalte ATAB2 wird die Erregung dieses Neurons eingetragen. In ATAB werden die Neuronen in nach der Höhe ihrer Erregung absteigenden Reihenfolge eingetragen.

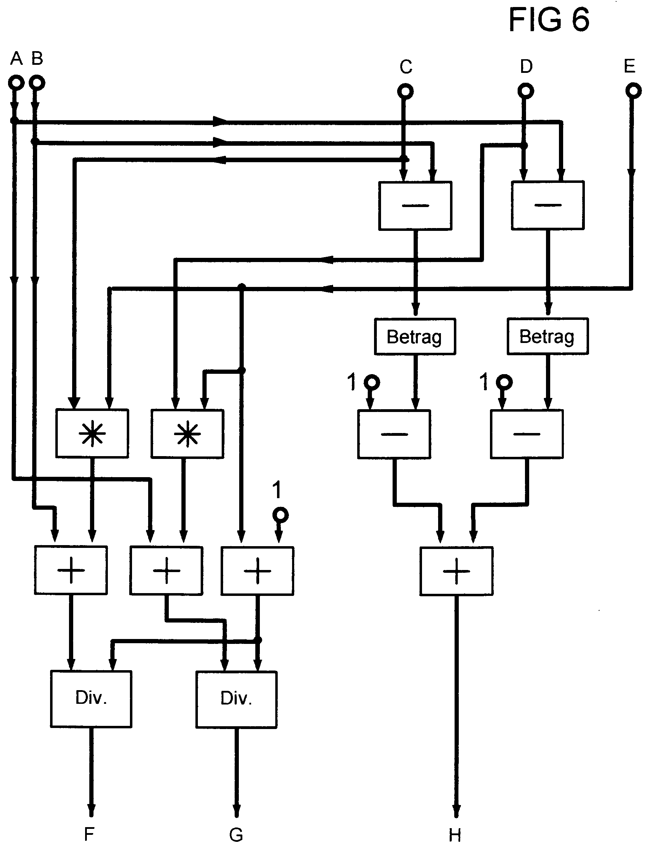

Der Aufbau des Erregungs- und Mittelwert-Vektor-Erzeugers ist in FIG 6 abgebildet. Sein Ausgang H liefert die Neuronenerregung, die sich entsprechend der Formel

$$H = (1 - //C\text{-}B//) + (1 - //D\text{-}A//)$$

ergibt. (//...// bedeutet der Betrag.)

Seine Ausgänge F und G liefern den Mittelwert-Vektor, der sich entsprechend den Formeln

$$F = (B + C{*}E)/(E{+}1) \text{ und } G = (A + D{*}E)/(E{+}1)$$

ergibt.

Die Steuerung NN1-ST steuert den Ablauf der Anordnung. Sie benutzt die Steuerleitungen ST1 bis ST12, um mit Steuertakten die Multiplexer MUX1 bis MUX6 und die Übernahme bzw. Speicherung von Daten zu steuern.

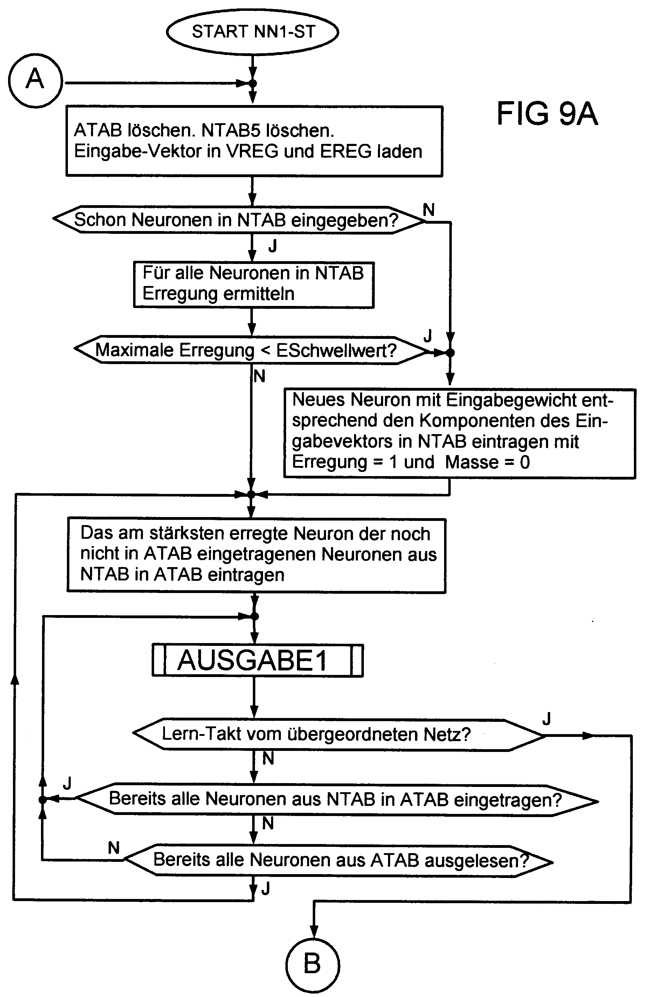

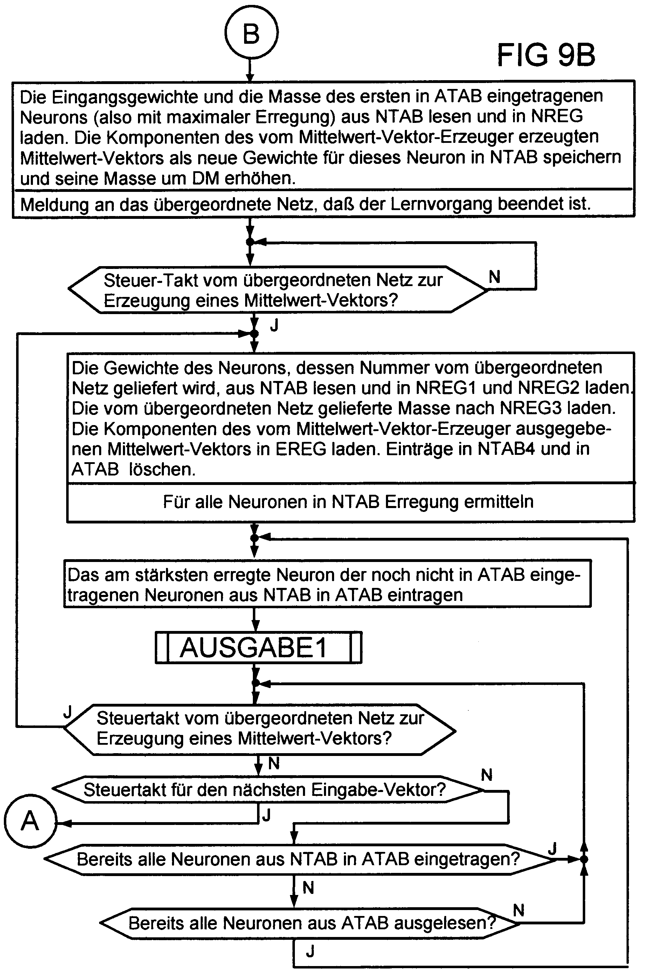

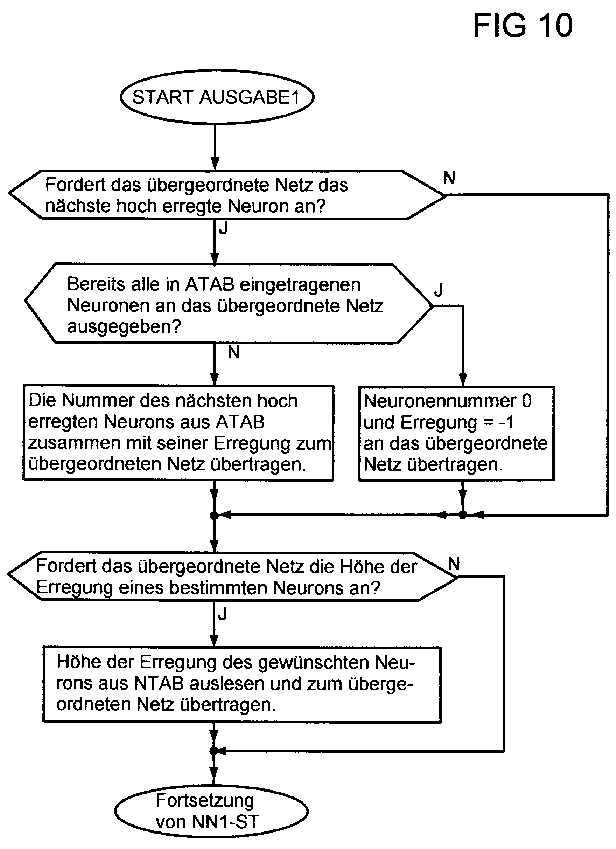

Der Steuerungsablauf für die Anordnung ist gemäß FIG 9A, 9B und FIG 10 folgendermaßen: Zur Initialisierung werden in der Spalte NTAB5 evtl. vorhandene Einträge gelöscht. Einträge in ATAB werden gelöscht. Dann wird der Eingabevektor EVEK in VREG geladen und von dort über MUX1 und MUX2 in EREG geladen. Anschließend wird für alle Neuronen, die bereits in NTAB gespeichert sind, die Erregung ermittelt, indem für jedes Neuron dessen Eingangsgewichte nach NREG ausgegeben werden und mit dem Erregungs-Erzeuger die Erregung für dieses Neuron ermittelt wird. Diese Erregung wird dann in NTAB4 in der entsprechenden Zeile eingetragen. Dabei wird auch die maximale Erregung ermittelt, die anschließend mit einem festgelegten Erregungsschwellwert verglichen wird. Ist die maximale Erregung kleiner als dieser Schwellwert oder ist noch kein Neuroneneintrag in NTAB enthalten, so wird ein neues Neuron in NTAB eingefügt. Dabei werden die Werte für seine Eingangsge- wichte aus EREG übernommen und in NTAB1 und NTAB2 in der Zeile, die diesem Neuron entspricht, gespeichert. Für seine Erregung wird der Wert 1 in NTAB4 und für seine Masse der Wert 0 in NTAB3 eingetragen.

Anschließend wird in einer Schleife, die im folgenden als Haupt-Schleife bezeichnet wird, jeweils das am stärksten erregte Neuron, welches noch nicht in ATAB eingetragen worden ist, mit seiner Nummer und seiner Erregung in ATAB eingetragen. In NTAB5 wird für dieses Neuron eine Sperr-Marke gesetzt, als Kennzeichen dafür, daß dieses Neuron bereits in ATAB eingetragen ist.

Dann wird zu Beginn einer inneren Schleife die Ausgabesteuerung AUSGABE1 (FIG 10) aufgerufen und abgefragt, ob das übergeordnete Netz mit einem Eingabetakt ET2 das nächste hoch erregte Neuron anfordert. Ist dies der Fall, so wird die Nummer und die Erregung des nächsten hoch erregten Neurons aus ATAB zum übergeordneten Netz übertragen. Sind jedoch bereits alle in ATAB eingetragenen Neuronen an das übergeordnete Netz ausgegeben worden, so wird die Neuronennummer 0 und für die Erregung der Wert -1 an das überge- ordnete Netz übertragen. Anschließend wird ein Ausgabetakt AT erzeugt.

Falls das übergeordnete Netz mit dem Eingabetakt ET3 die Höhe der Erregung eines bestimmten Neurons anfordert, so wird die vom Eingang NR3 gelieferte Neuronennummer über MUX3 in das Register NNR geladen und so die Zeile in NTAB, die dem gewünschten Neuron entspricht, über den Adreßeingang ENR adressiert. Die in dieser Zeile in NTAB4 gespeicherte Erregung wird ausgelesen und über MUX5 in AER geladen. Dann wird ein Ausgabetrakt AT erzeugt.

Die aus NTAB4 ausgegebene Erregung wird über MUX5 in das Register AER geladen und schließlich ein Ausgabetakt AT erzeugt. Anschließend wird NN1-ST (FIG 9A) fortgesetzt.

Falls ein Lerntakt LT vom übergeordneten Netz gesendet worden ist, wird der Lernvorgang, wie in FIG 9B dargestellt, ausgeführt. Ist dies nicht der Fall, so wird festgestellt, ob bereits alle Neuronen aus NTAB in ATAB eingetragen worden sind. In diesem Fall wird an den Anfang der inneren Schleife verzweigt und die Ausga- besteuerung AUSGABE1 aufgerufen und abgearbeitet. Anderenfalls wird festgestellt, ob bereits alle bisher in ATAB eingetragenen Neuronen an das übergeordnete Netz ausgegeben worden sind. In diesem Fall wird an den Anfang der Haupt-Schleife verzweigt. Anderenfalls wird an den Anfang der inneren Schleife verzweigt.

Der Lernvorgang, wie zu Anfang in FIG 9B dargestellt, läuft folgendermaßen ab: Zunächst wird die Nummer des ersten in ATAB eingetragenen Neurons aus ATAB1 ausgelesen und über MUX6 zu ENR geleitet. Die Gewichte und die Masse des Neuroneneintrags in NTAB, dessen Zeile jetzt adressiert ist, werden in NREG geladen und von der VORVERARBEITUNG übernommen. Der Mittelwert-Vektor-Erzeuger erzeugt nun den Mittelwert-Vektor, dessen Komponenten die neuen Gewichte für das lernende Neuron darstellen. Er wird über MUX1 und MUX2 in EREG geladen und von dort in die durch ENR adressierte Zeile von NTAB gespeichert. Die in NTAB3 für dieses Neuron gespeicherte Masse wird um einen festgelegten Wert DM, der z.B. zwischen 0 und 1 liegt, erhöht. Dann wird ein Ausgabetakt AT erzeugt und dem übergeordneten Netz dadurch mitgeteilt, daß der Lernvorgang beendet ist.

Anschließend wird auf einen Steuertakt MVT vom übergeordneten Netz zur Erzeugung eines Mittelwert-Vektors gewartet. Ist dieser Takt eingetroffen, so werden zu Beginn einer Schleife, die im folgenden als Mittelwert-Vektor-Schleife bezeichnet wird, die Eingangsgewichte des Neurons, dessen Nummer vom übergeordneten Netz am Eingang NR3 geliefert wird, aus NTAB1 und NTAB2 gelesen und in NREG1 und NREG2 geladen. Die am Eingang MMV gelieferte Masse wird über MUX4 in NREG3 geladen. Die VORVERARBEITUNG über- nimmt die Werte in NREG und der dann vom Mittelwert-Vektor- Erzeuger erzeugte Mittelwert-Vektor wird über MUX1 und MUX2 in EREG geladen. Dann werden alle Einträge in NTAB4 und in ATAB gelöscht und für alle Neuronen in NTAB die Erregung neu ermittelt und in NTAB4 gespeichert.

Anschließend wird in einer Schleife, die im folgenden als ATAB-Schleife bezeichnet wird, jeweils das am stärksten erregte Neuron der noch nicht in ATAB eingetragenen Neuronen aus NTAB in ATAB eingetragen. In NTAB5 wird für dieses Neuron eine Sperr-Marke gesetzt, als Kennzeichen dafür, daß dieses Neuron bereits in ATAB eingetragen ist. Dann wird die Ausgabesteuerung AUSGABE1 (FIG 9) aufgerufen und wie bereits oben beschrieben abgearbeitet. Zu Anfang einer nun beginnenden Schleife, die im folgenden als Steuertaktschleife bezeichnet wird, wird festgestellt, ob ein Steuertakt MVT vom übergeordneten Netz zur Erzeugung eines Mittelwert-Vektors gesendet worden ist. In diesem Fall wird zum Anfang der Mittelwert-Vektor-Schleife verzweigt. Anderenfalls wird abgefragt, ob vom übergeordneten Netz ein Steuertakt ST1 zur Bearbeitung des nächsten Eingabevektors gesendet worden ist. In diesem Fall wird an den Anfang der Steuerung NN1-ST (FIG 9A) verzweigt. Anderenfalls wird ermittelt, ob bereits alle Neuronen aus NTAB in ATAB eingetragen sind. In diesem Fall wird an den Anfang der Steuertaktschleife verzweigt. Anderenfalls wird abgefragt, ob bereits alle Neuronen aus ATAB ausgelesen sind. In diesem Fall wird an den Anfang der ATAB-Schleife verzweigt. Anderenfalls wird an den Anfang der Steuertakt-Schleife verzweigt.

Das Blockschaltbild von FIG 7 zeigt eine Anordnung für ein neuronales Netz ab der 2. Stufe der Netzhierarchie. NTAB ist wie bei der Anordnung für ein Netz der 1. Stufe ein Tabellenspeicher, dessen Zeilen durch die Adresse, die an seinem Adreßeingang ENR anliegt, adressiert werden. In jeder Zeile von NTAB können Werte für ein bestimmtes Neuron gespeichert werden, dessen Nummer der Zeilennummer in NTAB entspricht. Die folgende Tabelle gibt die Neuronen-Parameter an, die in den einzelnen Spalten von NTAB gespeichert werden:

<div align="center">

Tabelle II

| | |
|---|---|
| NTAB1 | Nr. des Neurons, mit dem der 1. Eingang verbunden ist. |
| NTAB2 | Nr. des Neurons, mit dem der 2. Eingang verbunden ist. |
| NTAB3 | Neuronenmasse |
| NTAB4 | Erregung des Neurons |
| NTAB5 | Sperr-Marke |

</div>

In NTAB werden alle Neuronen eines neuronalen Netzes ab der 2. Stufe gespeichert.

ATAB ist ein Tabellenspeicher, der die gleiche Funktionalität hat, wie für ATAB in der Anordnung für ein Netz der 1. Stufe bereits beschrieben worden ist.

Die Steuerung NN2-ST steuert den Ablauf der Anordnung. Sie benutzt die Steuerleitungen ST1 bis ST20, um mit Steuertakten die Multiplexer MUX1 bis MUX8 und die Übernahme bzw. Speicherung von Daten zu steuern.

Der Steuerungsablauf für die Anordnung ist gemäß FIG 11A bis 11C, FIG 12A bis 12D und FIG 13 folgendermaßen: Zur Initialisierung wird die gesamte Tabellenspalte NTAB4 auf -1 gesetzt und NTAB5 auf 0 gesetzt. Einträge in ATAB werden gelöscht. ZMARK, ZAUS und MERKER werden auf 0 gesetzt.

Falls es sich nicht um das Netz der obersten Stufe handelt, wartet die Steuerung auf den nächsten Eingabetakt ET1 vom übergeordneten Netz.

Handelt es sich um das Netz der obersten Stufe oder wird ein Eingabetakt vom übergeordneten Netz empfangen, so wird ein Eingabetakt ET1 über den Ausgang AT1 an das linke und rechte untergeordnete Netz geschickt.

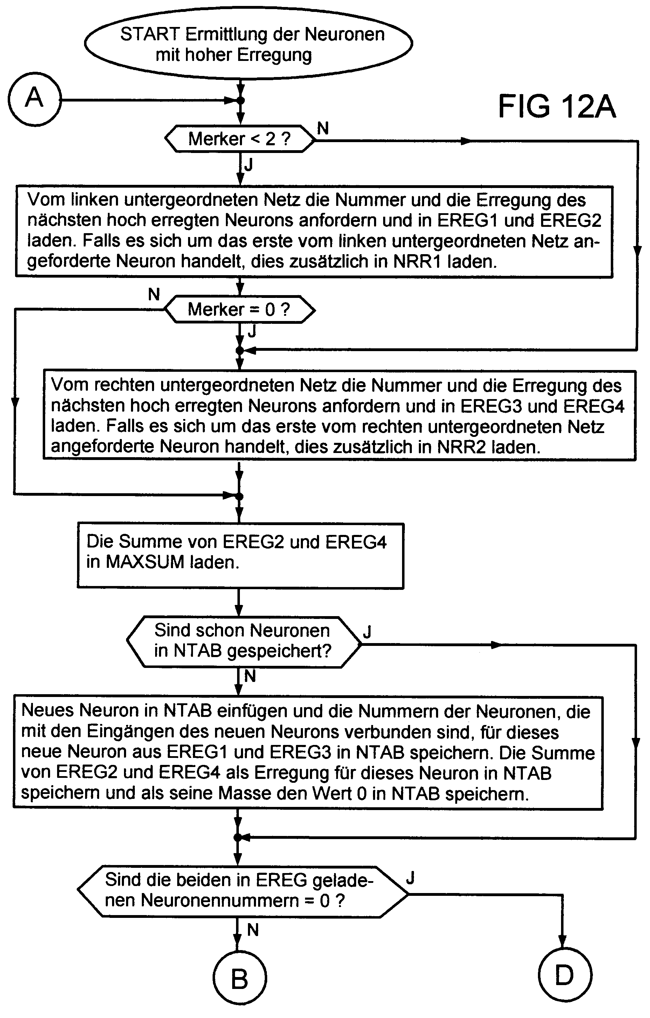

Nun wird die Teil-Steuerung ERMITTLUNG DER NEURONEN MIT HOHER ERREGUNG aufgerufen (FIG 12A bis 12D). Zu Anfang hat der Merker noch den Wert 0, so daß EREG mit dem ersten Eintrag in ATAB jeweils des linken und des rechten untergeordneten Netzes geladen wird. Dies geschieht, indem über den Ausgang ATL2 ein Eingabetakt ET2 an das linke untergeordnete Netz gesedet wird. Hat dieses Netz die gewünschten Informationen bereitgestellt, so sendet es einen Ausgabetakt AT, der über den Eingang ETL empfangen wird. Nun können die Informationen an den Eingängen NRL und ERGL in EREG1 und EREG2 geladen werden. Da es sich um das erste vom linken untergeordneten Netz angeforderte Neuron handelt, wird dies zusätzlich in NRR1 geladen.

Auf entsprechende Weise werden die Informationen vom rechten untergeordneten Netz angefordert und in EREG3 und EREG4 und in diesem Fall auch in NRR2 geladen.

MUX1 und MUX2 werden so angesteuert, daß der Addierer die Summe von EREG2 und EREG4 liefert. Diese wird in MAXSUM geladen.

Falls in NTAB noch kein Eintrag für ein Neuron enthalten ist, wird nun das Neuron Nr. 1 in der 1. Zeile eingefügt. Die Nummern der Neuronen, die mit den Eingängen dieses neuen Neurons verbun- den sind, werden aus EREG1 und EREG3 übernommen und in der 1. Zeile von NTAB1 und NTAB2 gespeichert. Die Summe von EREG2 und EREG4 wird als Erregung für dieses Neuron in NTAB4 gespeichert. Für seine Masse wird der Wert 0 in NTAB3 gespeichert. Dieser Wert wird später beim Lernvorgang für dieses Neuron erhöht.

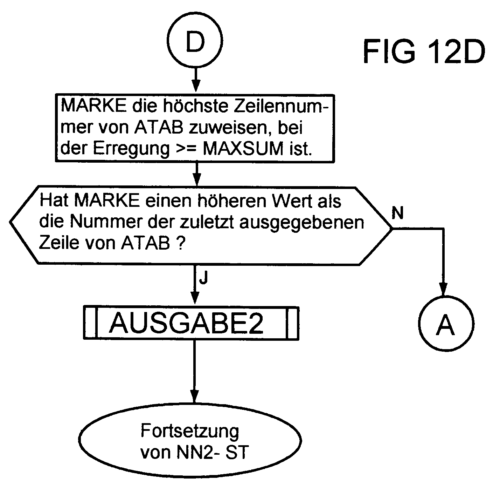

Falls beide in EREG geladenen Neuronennummern den Wert 0 haben, bedeutet dies, daß bereits alle Neuronen der beiden untergeordneten Netze aus deren ATABs ausgelesen worden sind. In diesem Fall wird zum Anfang des Teildiagramms in FIG 12D verzweigt.

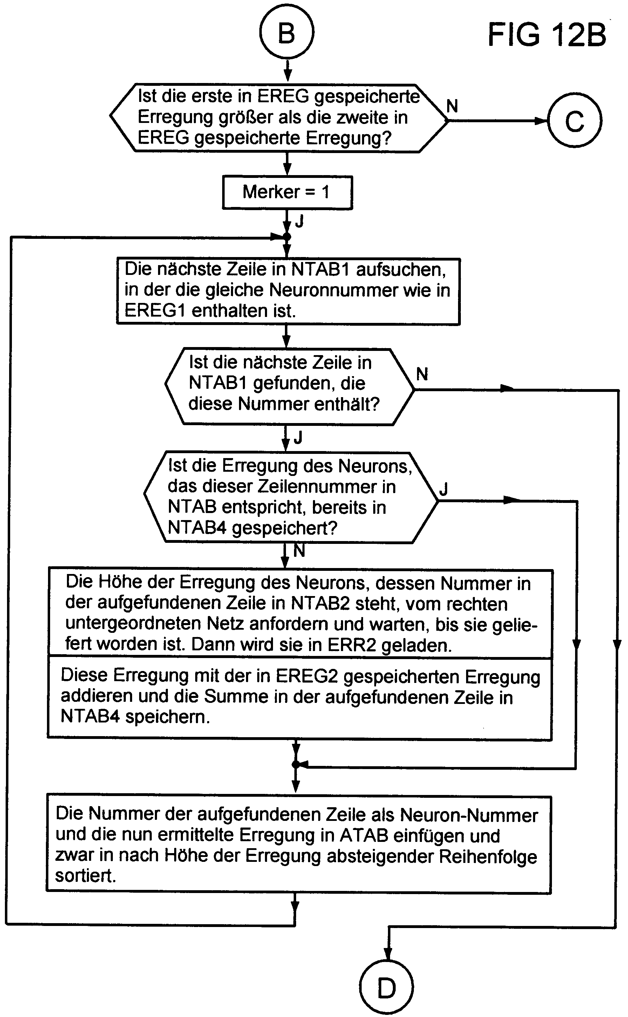

Anderenfalls wird die in EREG2 gespeicherte Erregung mit der in EREG4 gespeicherten Erregung verglichen. Ist sie größer, so wird der Merker auf 1 gesetzt und wie in FIG 12B näher beschrieben für jedes in NTAB eingetragene Neuron, dessen linker Eingang mit dem Neuron verbunden ist, dessen Nummer in EREG1 geladen ist, seine Erregung ermittelt. Ist seine Erregung noch nicht in NTAB4 gespeichert, so wird die Höhe der Erregung des Neurons, das mit seinem rechten Eingang verbunden ist, vom rechten untergeordneten Netz angefordert, indem zunächst die Neuronnummer am Ausgang NRR3 zur Verfügung gestellt wird und dann ein Ausgabetakt ATR3 erzeugt wird. Dann wartet die Steuerung, bis das rechte untergeordnete Netz einen Ausgabetakt AT sendet, der über den Eingang ETR empfangen wird. Nun wird die am Eingang ERGR gelieferte Erregung in das Register ERR2 geladen. Dann werden die Multiplexer MUX1 und MUX2 so angesteuert, daß der Addierer die Summe von EREG2 und ERR2 liefert. Diese Summe wird für das entsprechende Neuron in NTAB4 gespeichert und zusätzlich dessen Neuronennummer und Erre- gung in ATAB eingefügt, und zwar in nach Höhe der Erregung absteigender Reihenfolge sortiert.

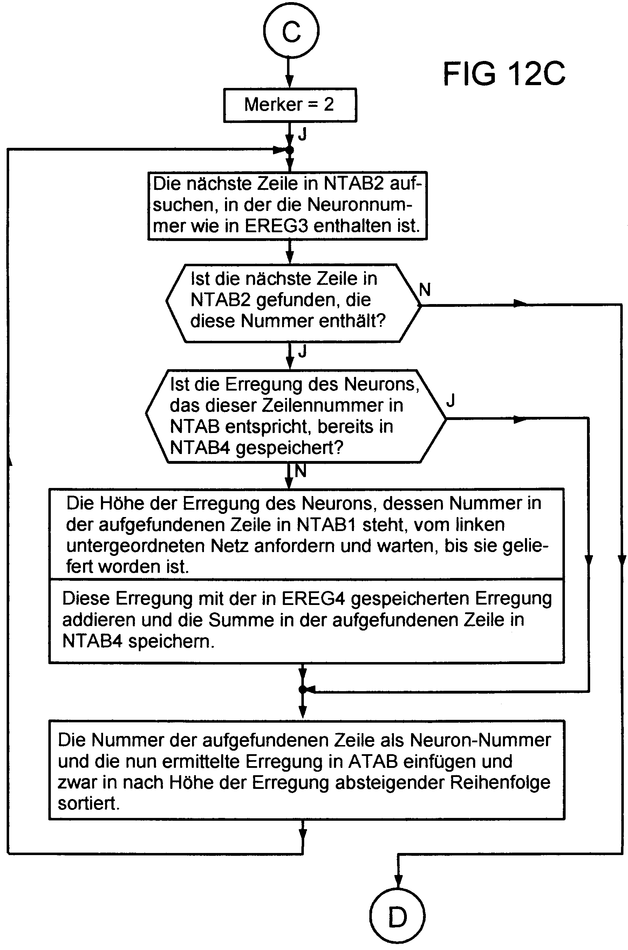

Ist die in EREG2 gespeicherte Erregung nicht größer als die in EREG4 gespeicherte, so wird der Merker auf 2 gesetzt und wie in FIG 12C näher beschrieben analog dem Ablauf in FIG 12B verfahren.

Anschließend wird MARKE die höchste Zeilennummer von ATAB zugewiesen, bei der die Erregung größer oder gleich dem in MAXSUM geladenen Wert ist. Hat MARKE einen höheren Wert als die Nummer der zuletzt ausgegebenen Zeile von ATAB, so können wieder Einträge aus ATAB an das übergeordnete Netz gesendet werden. Dazu wird die Ausgabesteuerung AUSGABE2 aufgerufen. Anderenfalls wird an den Anfang dieser Teilsteuerung (FIG 12A) verzweigt.

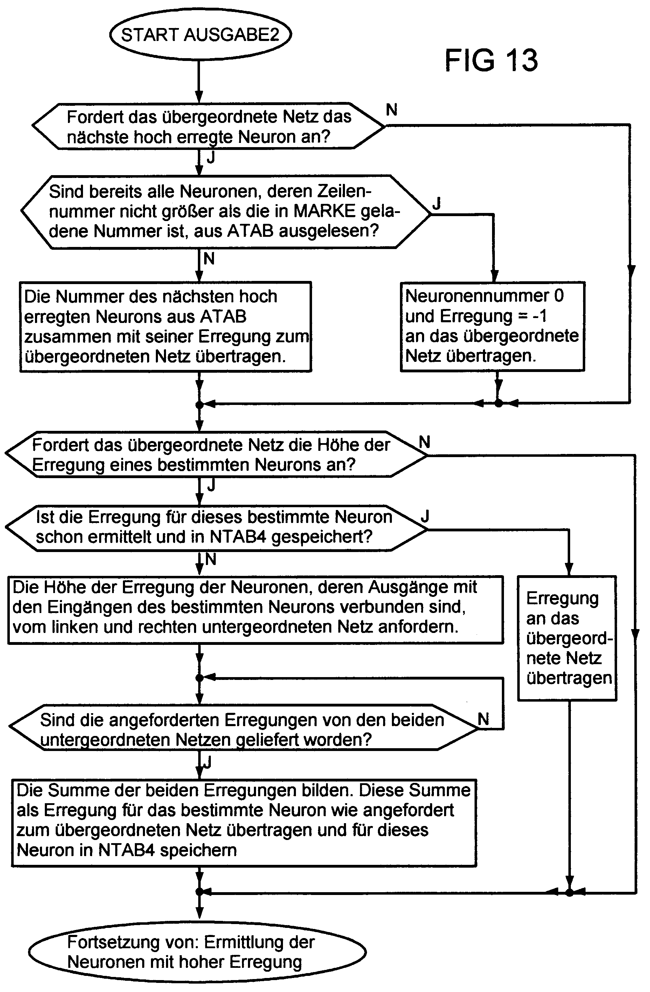

Nach dem Start von AUSGABE2 (FIG 13) wird abgefragt, ob das über- geordnete Netz mit einem Eingabetakt ET2 das nächste hoch erregte Neuron aus ATAB anfordert. In diesem Fall wird festgestellt, ob bereits alle Neuroneneinträge bis zu der durch MARKE bestimmten Zeilennummer an das übergeordnete Netz ausgegeben worden sind. In diesem Fall wird die Neuronennummer 0 und für die Erregung der Wert -1 an das übergeordnete Netz übertragen, welches an diesen Werten erkennt, daß in diesem Netz bereits alle existierenden Neuronen an das übergeordnete Netz übertragen worden sind. Anderenfalls wird die Nummer des nächsten hoch erregten Neurons aus ATAB zusammen mit seiner Erre- gung in die Register ANR und AER geladen und ein Ausgabetakt AT erzeugt.

Fordert das übergeordnete Netz mit einem Eingabetakt ET3 die Höhe der Erregung eines bestimmten Neurons an, so wird die Nummer dieses Neurons vom Eingang NR3 über MUX3 in NNR geladen. Dann wird sie über MUX5 und MUX4 an den Adreßeingang ENR geführt und so der Eintrag für dieses Neuron in NTAB adressiert. Nun wird geprüft, ob in der Spalte NTAB4 in dieser Zeile bereits ein gültiger Wert für die Erregung dieses Neurons eingetragen ist. In diesem Fall wird die Erregung in das Register AER geladen und ein Ausgabetakt AT erzeugt und damit anschließend die Teilsteuerung ERMITTLUNG DER NEURONEN MIT HOHER ERREGUNG fortgesetzt. Anderenfalls wird die Erregung der Neuronen, deren Nummer in NTAB1 und NTAB2 in dieser Zeile steht, deren Ausgänge also mit den Eingängen dieses Neurons verbunden sind, vom linken und rechten untergeordneten Netz angefordert. Dazu werden die Nummern in NTAB1 und NTAB2 an den Ausgängen NRL3 und NRR3 zur Verfügung gestellt und dann je ein Ausgabetakt ATL3 und ATR3 erzeugt, der bei den untergeordneten Netzen als ET3 empfangen wird. Nun wartet die Ausgabesteuerung auf das Eintreffen eines Eingabetaktes ETL. Nach seinem Eintreffen wird die nun am Eingang ERGL anliegende Erre- gung in das Register ERR1 geladen. Auf entsprechende Weise wird die vom rechten untergeordneten Netz gelieferte Erregung in das Register ERR2 geladen. Die Multiplexer MUX1 und MUX2 werden nun so angesteuert, daß der Addierer die Summe von ERR1 und ERR2 bildet. Diese Summe wird in NTAB4 in der entsprechenden Zeile gespeichert. Anschließend wird die Teilsteuerung ERMITTLUNG DER NEURONEN MIT HOHER ERREGUNG fortgesetzt, die nun ebenfalls am Ende angelangt ist. Jetzt wird die Steuerung NN2-ST fortgesetzt (FIG 11A).

Falls es sich nicht um das Netz der obersten Stufe handelt, wird die Teilsteuerung ERMITTLUNG DER NEURONEN MIT HOHER ERREGUNG erneut aufgerufen und wie oben beschrieben erneut abgearbeitet. Handelt es sich um das Netz der obersten Stufe, dann wird das Ergebnis, also die Nummer des am höchsten erregten Neurons, ausgegeben. Dies ist der erste Neuroneintrag in ATAB1. Nach der Ergebnisausgabe oder nachdem ein Lerntakt von der übergeordneten Stufe über den Eingang LT empfangen worden ist, wird ein Lerntakt LT2 an das linke und rechte untergeordnete Netz gesendet und gewartet, bis beide Netze den erfolgreichen Abschluß des Lernvor- gangs für ihre maximal erregten Neuronen zurückgemeldet haben, indem sie jeweils einen Ausgabetakt AT senden, der über die Eingänge ETL bzw. ETR empfangen wird.

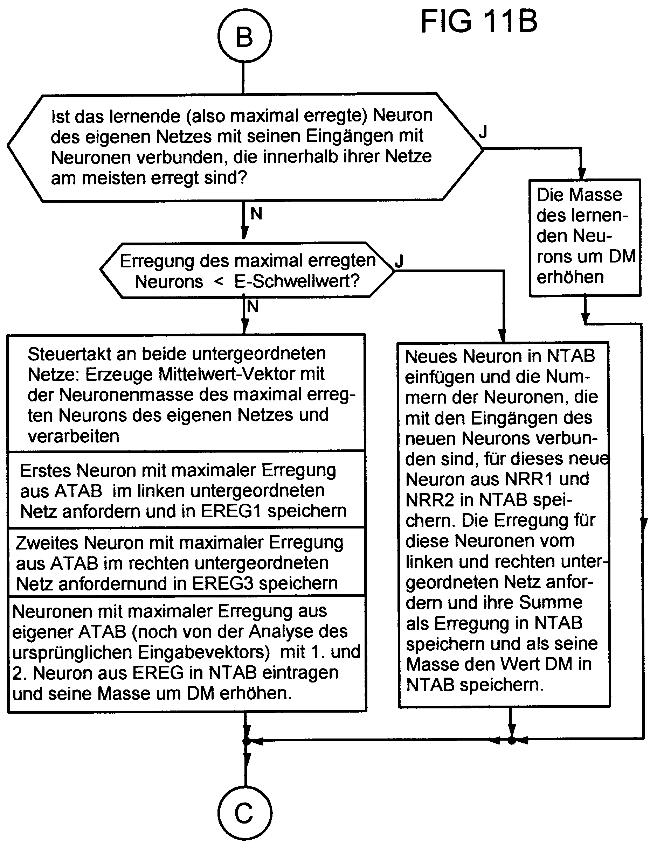

Nun folgt der Lernvorgang für das maximal erregte Neuron des eigenen Netzes (FIG 11B). Zunächst wird festgestellt, ob dieses Neuron mit seinen Eingängen mit Neuronen verbunden ist, die innerhalb ihrer Netze am meisten erregt sind. Dies geschieht, indem die Nummern der Neuronen, die mit seinen Eingängen verbunden sind, aus NTAB ausgelesen und mit den in NRR1 und NRR2 gespeicherten Werten verglichen werden. Bei Gleichheit sind die Eingänge des lernenden Neurons bereits mit den richtigen Neuronen der untergeordneten Netze verbunden. Deshalb wird der Lernvorgang nach Erhöhung der Masse des lernenden Neurons um DM und Eintragen in NTAB3 beendet.

Bei Ungleichheit wird zunächst festgestellt, ob die Erregung des maximal erregten Neurons kleiner ist als der festgelegte Erregungsschwellwert. In diesem Fall wird ein neues Neuron in NTAB eingefügt und die Nummer der Neuronen, die mit den Eingängen dieses neuen Neurons verbunden sind, für dieses neue Neuron aus NRR1 und NRR2 über MUX7 und MUX8 geleitet und in NTAB gespeichert. Dann wird die Erregung für diese beiden Neuronen vom linken und rechten untergeordneten Netz angefordert und ihre Summe als Erregung für das eingefügte Neuron in NTAB4 gespeichert und als seine Masse wird der Wert DM in NTAB3 gespeichert.

Ist die Erregung des maximal erregten Neurons nicht kleiner als der Erregungsschwellwert so wird die Masse dieses Neurons am Ausgang ML2 zur Verfügung gestellt und dann ein Mittelwert-Vektor-Takt MVT über den Ausgang MV2 an beide untergeordneten Netze gesendet und diese dadurch aufgefordert, Mittelwert-Vektoren mit der an ihrem Eingang MMV zur Verfügung gestellten Neuronenmasse zu erzeugen und zu verarbeiten.

Falls dies das Netz der obersten Stufe ist, ist damit die Verarbeitung des Eingabemusters abgeschlossen und es wird ein Eingabetakt für das Einlesen der Eingabevektoren des nächsten Eingabemusters erzeugt. Anderenfalls wird mit einem Ausgabetakt AT das übergeordnete Netz informiert, daß der Lernvorgang für das eigene Netz ausgeführt ist. Anschließend wird auf einen Mittelwert-Vektor-Takt MVT vom übergeordneten Netz gewartet.

Nach dessen Eintreffen wird zu Beginn einer ersten Schleife das Neuron in NTAB aufgesucht, dessen Nummer über den Eingang NR3 vom übergeordneten Netz geliefert wird. Dann werden die Nummern der Neuronen, mit denen die Eingänge dieses Neurons verbunden sind, aus NTAB1 und NTAB2 gelesen. Diese Nummern werden über die Ausgänge NRL3 und NRR3 den untergeordneten Netzen zur Verfügung gestellt. Nun wird die Neuronenmasse, die am Eingang MMV zur Verfügung steht, über den Ausgang MN2 den beiden untergeordneten Netzen über ihre Eingänge MMV zur Verfügung gestellt. Dann wird ein Mittelwert-Vektor-Takt MVT erzeugt und über den Ausgang MV2 an beide untergeordneten Netze gesendet.

Anschließend wird zu Beginn einer zweiten Schleife die Teilsteuerung ERMITTLUNG DER NEURONEN MIT HOHER ERREGUNG aufgerufen und wie bereits oben erläutert ausgeführt. Nun wird zu Beginn einer dritten Schleife festgestellt, ob das übergeordnete Netz einen Steuertakt MVT zur Erzeugung und anschließenden Verarbeitung eines Mittelwert-Vektors gesendet hat. In diesem Fall wird an den Anfang der ersten Schleife verzweigt. Anderenfalls wird abgefragt, ob bereits alle Neuronen aus NTAB in ATAB eingetragen sind. Trifft dies zu, so wird an den Anfang der dritten Schleife verzweigt. Sonst wird abgefragt, ob bereits alle Neuronen bis zur Zeilennummer wie in MARKE geladen aus ATAB ausgelesen sind. In diesem Fall wird zum Anfang der zweiten Schleife, anderenfalls zum Anfang der dritten Schleife verzweigt.

Damit ein Muster auch richtig klassifiziert werden kann, wenn es selbst in x-Richtung um eine oder nur wenige Positionen verschoben ist oder Teile des Musters nur wenig verschoben sind, wird im folgenden eine Erweiterung des Verfahrens beschrieben.

In FIG 4 ist eine gegenüber FIG 2 erweiterte Netzhierarchie abgebildet. Dabei wurden die Teil-Netzhierarchien, die bis zur 2. Stufe reichen, kopiert und um eine Position in x-Richtung links bzw. rechts versetzt zusätzlich angeordnet. Dadurch erkennen die um eine Position verschobenen Teil-Netzhierarchien auf der 2. Stufe um eine Position verschobene Teilmuster. Bei der Ermittlung der Erregung eines Neurons des Netzes der 3. Stufe wird für jeden seiner Eingänge nicht nur die Erregungen des Neurons auf der 2. Stufe berücksichtigt, dessen Ausgang mit dem Eingang dieses Neurons der 3. Stufe verbunden sind, sondern auch die Erregung der entsprechenden Neuronen im linken bzw. rechten benachbarten Netz der 2. Stufe, die nur um eine Position in X-Richtung verschoben sind. Von diesen Erregungen wird jeweils nur der maximale Wert berücksichtigt und an das Neuron im Netz der 3. Stufe weitergeleitet.

Auf entsprechende Weise werden auf höheren Stufen Netze hinzugefügt, die nur um eine Position gegenüber den vorhandenen Netzen verschoben sind, einschließlich der für sie zusätzlich erforderlichen Teil-Netzhierarchie auf den darunter liegenden Stufen. Auf noch höheren Stufen können auch Netze hinzugefügt werden, die um 1 bis n Positionen verschoben sind, wobei n um so höher sein kann, je höher die Stufe ist.

Für diese Erweiterung des Verfahrens ist es erforderlich, daß alle Netze einer Stufe in ihrer Neuronentabelle den gleichen Inhalt gespeichert haben. Dies wird dadurch erreicht, daß für Neuronen, die in eine Neuronentabelle eines Netzes hinzugefügt werden, auch entsprechende Einträge an alle anderen Netze dieser Stufe gesendet werden und in deren Neuronentabelle hinzugefügt werden, und zwar in der Spalte mit der gleichen Spaltennummer. Werden bei einem Neuroneneintrag in einer Tabelle eines Netzes die Neuronenparameter beim Lernvorgang verändert, so wird dieser aktualisierte Neuroneneintrag auch an alle anderen Netze der gleichen Stufe gesendet, wo er den alten Eintrag ersetzt. Bei der Realisierung des Verfahrens durch ein Computerprogramm kann auch nur eine Neuronentabelle je Stufe verwendet werden, bei der für jedes Netz der Stufe eine eigene Spalte für die Erregung der Neuronen verwendet wird.

Im folgenden wird eine zusätzliche Erweiterung des Verfahrens beschrieben: Überschreitet die Anzahl der Neuronen in einem Netz einen je Stufe festgelegten Maximalwert, so wird der für das Einfügen von Neuronen maßgebende und für jede Stufe festgelegte Erregungsschwellwert für dieses Netz um einen festgelegten Prozentsatz verringert. Dadurch wird die Anzahl der in der Lernphase neu hinzuzufügenden Neuronen verringert. Anschließend wird eine Komprimierung dieses Netzes vorgenommen.

Dies geschieht bei Netzen der untersten Stufe, indem jeweils zwei Neuronen in diesem Netz zu einem Neuron zusammengefaßt werden, wenn die Abweichung ihrer Gewichtsvektoren voneinander einen Minimalwert unterschreitet. Dazu wird für jedes Neuron dieses Netzes die folgende Prozedur durchgeführt: Der Gewichtsvektor dieses fortlaufenden Neurons wird als Eingabevektor für dieses Netz verwendet. Das Neuron mit der höchsten Erregung (außer dem fortlaufenden Neuron selbst) wird ausgewählt. Überschreitet diese Erregung den für diese Stufe festgelegten (aber nun verringerten) Erregungsschwellwert, so wird das fortlaufende Neuron mit dem ausgewählten Neuron zusammengefaßt. Der Gewichtsvektor des resultierenden Neurons ergibt sich aus dem entsprechend ihrer Massen gewichteten Mittelwert der Gewichtsvektoren der beiden zusammengefaßten Neuronen. Die Masse des resultierenden Neurons ergibt sich aus der Summe der Massen der beiden zusammengefaßten Neuronen. Die Verbindung von den Ausgängen der beiden zusammengefaßten Neuronen zu den Eingängen von Neuronen der darüberliegenden Neuronenschicht werden durch Verbindungen vom Ausgang des resultierenden Neurons zu den entsprechenden Eingängen der Neuronen der darüberliegenden Schicht ersetzt.

Die Komprimierung bei Netzen auf höherer Stufe geschieht folgendermaßen: Jeweils zwei Neuronen in dem zu komprimierenden Netz werden zu einem Neuron zusammengefaßt, wenn die Abweichung der ihnen zugeordneten Gruppen von Gewichtsvektoren auf unterster Stufe voneinander einen Minimalwert unterschreitet. Dazu wird für jedes Neuron dieses Netzes die folgende Prozedur durchgeführt: Die diesem fortlaufenden Neuron auf unterster Stufe zugeordnete Gruppe von Gewichtsvektoren wird als Gruppe von Eingabevektoren verwendet und von den entsprechenden Netzen auch auf höheren Stufen verarbeitet. Das Neuron mit der höchsten Erregung im zu komprimierenden Netz außer dem fortlaufenden Neuron selbst wird ausgewählt. Überschreitet diese Erregung den für diese Stufe festgelegten (aber nun verringerten) Erregungsschwellwert, so wird das fortlaufende Neuron mit dem ausgewählten Neuron zusammengefaßt. Die Verbindungen der Eingänge des resultierenden Neurons werden folgendermaßen ermittelt:

Von der dem fortlaufenden Neuron zugeordneten Gruppe von Gewichtsvektoren auf unterster Stufe und der dem ausgewählten Neuron zugeordneten Gruppe von Gewichtsvektoren auf unterster Stufe wird der gewichtete Mittelwert gebildet, wobei zur Gewichtung die Masse des fortlaufenden Neurons und die Masse des ausgewählten Neurons verwendet wird. Die so ermittelte Gruppe von Mittelwert-Vektoren wird als Gruppe von Eingabevektoren verwendet und von den entsprechenden Netzen auch auf höheren Stufen verarbeitet. Die Eingänge des resultierenden Neurons werden dann mit den Ausgängen der Neuronen der zugeordneten Netzgruppe der darunterliegenden Stufe verbunden, die jeweils innerhalb ihres Netzes am meisten erregt sind.

Die Masse des resultierenden Neurons ergibt sich aus der Summe der Massen der beiden zusammengefaßten Neuronen. Die Verbindung von den Ausgängen der beiden zusammengefaßten Neuronen zu den Eingängen von Neuronen der darüberliegenden Neuronenschicht werden durch Verbindungen vom Ausgang des resultierenden Neurons zu den entsprechenden Eingängen der Neuronen der darüberliegenden Schicht ersetzt.

## Patentansprüche

1. Verfahren zum mehrstufigen unüberwachten Lernen unter Verwendung von unüberwacht lernenden neuronalen Netzen, bei denen der Lernvorgang jeweils durch das am meisten erregte Neuron einer Neuronenschicht bestimmt wird,

   **dadurch gekennzeichnet**,

   daß die Netze so hierarchisch angeordnet sind, daß als Eingabewerte eines Netzes ab der zweiten Stufe Ausgabewerte jeweils zweier oder mehrerer unüberwacht lernender neuronaler Netze auf der darunterliegenden Stufe dienen und daß bei Lernvorgängen auf höheren Stufen bestehende Verbindungen von Eingängen lernender Neuronen zu Ausgängen von Neuronen der darunterliegenden Stufe gelöst werden können und neue Verbindungen von den Eingängen lernender Neuronen zu Ausgängen von Neuronen der darunterliegenden Stufe hergestellt werden können.

2. Verfahren nach Anspruch 1 dadurch gekennzeichnet, daß jedes Neuron eines Netzes auf höherer Stufe mit jedem seinen Eingängen mit genau einem Neuron eines Netzes auf unterer Stufe verbunden ist.

3. Verfahren nach Anspruch 1 oder 2 dadurch gekennzeichnet, daß beim Lernvorgang für ein Neuron auf höherer Stufe zunächst die diesem Neuron zugeordneten Gewichtsvektoren auf unterster Stufe ermittelt werden und dann auf der untersten Stufe die Mittelwert-Vektoren gebildet werden, die sich aus dem gewichteten Mittelwert der Gewichtsvektoren und den jeweils zugehörigen Eingabevektoren ergeben, wobei die Gewichtsvektoren mit dem Wert der Masse des lernenden Neurons gewichtet werden und die Eingabevektoren mit dem Wert 1 gewichtet werden, und daß die sich auf diese Weise ergebenden Mittelwert-Vektoren dann von den entsprechenden Netzen auch auf den höheren Stufen verarbeitet werden und die Eingänge des lernenden Neurons dann mit den Ausgängen der Neuronen der zugeordneten Netz-Gruppe der darunterliegenden Stufe verbunden werden, die jeweils innerhalb ihres Netzes am meisten erregt sind.

4. Verfahren nach Anspruch 1, 2 und 3 dadurch gekennzeichnet, daß die Neuronen in einer Neuronentabelle je Netz verwaltet werden und daß alle Netze der selben Stufe in ihren Neuronentabellen den gleichen Inhalt gespeichert haben oder daß nur eine Neuronentabelle je Stufe verwendet wird, bei der für jedes Netz der Stufe eine eigene Spalte für die Erregung der Neuronen verwendet wird, und daß bei Netzen auf höheren Stufen benachbarte Netze auf der gleichen Stufe einschließlich der für sie zusätzlich erforderlichen Teil-Netzhierarchie auf den darunterliegenden Stufen hinzugefügt werden, die um eine Position oder nur wenige Positionen verschobene Eingabemuster erkennen und daß bei der Ermittlung der Erregung eines Neurons auf höherer Stufe für jeden seiner Eingänge nicht nur die Erregung des Neurons in der darunterliegenden Stufe berücksichtigt wird, dessen Ausgang mit diesem Eingang verbunden ist, sondern auch die Erregung der entsprechenden Neuronen in benachbarten Netzen, und daß nur der Maximalwert dieser Erregungen über diesen Neuroneneingang an das Neuron des übergeordneten Netzes weitergeleitet wird.

5. Verfahren nach einem der Ansprüche 1 bis 4 dadurch gekennzeichnet, daß wenn die Anzahl der Neuronen in einem Netz einen je Stufe festgelegten Maximalwert überschreitet, der für das Einfügen von Neuronen maßgebende und für jede Stufe festgelegte Erregungsschwellwert für dieses Netz um einen festgelegten Prozentsatz verringert wird, wodurch die Anzahl der in der Lernphase neu hinzuzufügenden Neuronen verringert wird und daß anschließend eine Komprimierung dieses Netzes vorgenommen wird, was bei einem beliebigen Netz der untersten Stufe dadurch geschieht, daß jeweils zwei Neuronen in diesem Netz zu einem Neuron zusammengefaßt werden, wenn die Abweichung ihrer Gewichtsvektoren voneinander einen Minimalwert unterschreitet und daß sich der Gewichtsvektor des resultierenden Neurons aus dem entsprechend ihrer Massen gewichteten Mittelwert der Gewichtsvektoren der beiden zusammengefaßten Neuronen ergibt und daß sich die Masse des resultierenden Neurons aus der Summe der Massen der beiden zusammengefaßten Neuronen ergibt und daß anschließend die Verbindungen von den Ausgängen der beiden zusammengefaßten Neuronen zu den Eingängen von Neuronen der darüberliegenden Neuronenschicht durch Verbindungen vom Ausgang des resultierenden Neurons zu den entsprechenden Eingängen der Neuronen der darüberliegenden Schicht ersetzt werden, und daß eine Komprimierung eines beliebigen Netzes auf höherer Stufe dadurch geschieht, daß jeweils zwei Neuronen in dem zu komprimierenden Netz zu einem Neuron zusammengefaßt werden, wenn die Abweichung der ihnen zugeordneten Gruppen von Gewichtsvektoren auf unterster Stufe voneinander einen Minimalwert unterschreitet und daß die Eingänge des resultierenden Neurons mit den Ausgängen der Neuronen der zugeordneten Netzgruppe auf der darunterliegenden Stufe verbunden werden, die jeweils innerhalb ihres Netzes am meisten erregt werden, wenn von der dem fortlaufenden Neuron zugeordneten Gruppe von Gewichtsvektoren auf unterster Stufe und der dem ausgewählten Neuron zugeordneten Gruppe von Gewichtsvektoren auf unterster Stufe der gewichtete Mittelwert gebildet wird, wobei zur Gewichtung die Masse des fortlaufenden Neurons und die Masse des ausgewählten Neurons verwendet wird und die so ermittelte Gruppe von Mittelwert-Vektoren als Gruppe von Eingabevektoren verwendet wird und von den entsprechenden Netzen auch auf höheren Stufen verarbeitet wird, und daß sich die Masse des resultierenden Neurons aus der Summe der Massen der beiden zusammengefaßten Neuronen ergibt, und daß die Verbindung von den Ausgängen der beiden zusammengefaßten Neuronen zu den Eingängen von Neuronen der darüberliegenden Neuronenschicht durch Verbindungen vom Ausgang des resultierenden Neurons zu den entsprechenden Eingängen der Neuronen der darüberliegenden Schicht ersetzt werden.

6. Anordnung zum mehrstufigen unüberwachten Lernen unter Verwendung von neuronalen Netzen, **gekennzeichnet durch** eine Hierarchie von Schaltungsanordnungen für jeweils ein neuronales Netz, bei der als Eingabewerte für ein Netz ab der zweiten Stufe Ausgabewerte von zwei oder mehreren Netzen von darunterliegenden Stufen verwendet werden.

7. Anordnung nach Anspruch 6, **gekennzeichnet durch** einen Tabellenspeicher, der in jeder Schaltungsanordnung enthalten ist und dessen Zeilen durch die Adresse, die an seinem Adreßeingang anliegt, adressiert werden, und in denen jeweils Werte für ein bestimmtes Neuron wie seine Eingangsgewichte (bei Netzen der untersten Stufe), die Nummern der Neuronen, mit denen seine Eingänge verbunden sind (bei Netzen ab der zweiten Stufe), seine Neuronenmasse, seine Erregung und weitere Steuerinformationen gespeichert werden können.

8. Anordnung nach Anspruch 6 oder 7,
**gekennzeichnet durch** einen Ausgabe-Tabellenspeicher, der in den Schaltungsanordnungen enthalten ist und dessen Zeilen durch die Adresse, die an seinem Adreßeingang anliegt, adressiert werden, und in denen bei der Verarbeitung eines Eingabevektors jeweils die Nummer und die Erregung von Neuronen eingetragen werden, und zwar in nach Höhe ihrer Erregung absteigenden Reihenfolge sortiert.

9. Anordnung nach einem der Ansprüche 6 bis 8,
**gekennzeichnet durch** einen Erregungs- und Mittelwert-Vektor-Erzeuger, der in Schaltungsanordnungen der Netze der untersten Stufe enthalten ist und

a) die Erregung eines Neurons mit n Eingängen berechnet, indem zunächst die Differenzen zwischen den Eingangsgewichten des Neurons und den entsprechenden Netz-Eingangswerten gebildet werden und dann die Summe ihrer Beträge von der Zahl n subtrahiert wird, und
b) einen Mittelwert-Vektor abhängig vom Eingabevektor, dem Gewichtsvektor eines Neurons und einer vorgegebenen Neuronenmasse erzeugt, indem zunächst die Eingangsgewichte des Neurons mit der vorgegebenen Neuronenmasse multipliziert werden, dann jeweils die entsprechenden Netz-Eingangswerte addiert werden und anschließend diese Ergebnisse durch die um 1 erhöhte vorgegebene Neuronenmasse dividiert werden und die so ermittelten Komponenten des Mittelwet-Vektors ausgegeben werden.

10. Anordnung nach Anspruch 8 oder 9,
**gekennzeichnet durch** eine Steuerung, die in Schaltungsanordnungen für die neuronalen Netze enthalten ist und

a) das Einfügen von Neuronen in den Tabellenspeicher,
b) das Ermitteln der Erregung von Neuronen und Eintragung dieser Erregung in den Tabellenspeicher,
c) das Eintragen der Nummer und der Erregung von Neuronen in den Ausgabe-Tabellenspeicher nach Höhe ihrer Erregung sortiert in absteigender Reihenfolge,
d) die Übertragung der Nummer und der Erregung des nächsten hoch erregten Neurons aus dem Ausgabe-Tabellenspeicher zu einem der übergeordneten Netze,
e) das Auslesen der Höhe der Erregung des gewünschten Neurons aus dem Tabellenspeicher und die Übertragung an ein übergeordnetes Netz steuert.

3. Stufe

2. Stufe
(besteht nur
aus einer
Gruppe)

1. Stufe

E1  E2      E3  E4      E5  E6      E7  E8

EVEK1      EVEK2      EVEK3      EVEK4

Gruppe 1                    Gruppe 2

FIG 1

3. Stufe

2. Stufe

1. Stufe

E1  E2    E3  E4    E5  E6    E7  E8

X

FIG 2

FIG 3

E0  E1  E2  E3  E4  E5  E6  E7  E8  E9

FIG 4

# FIG 5

FIG 6

FIG 7

# FIG 8

START NN1-ST

**A**

ATAB löschen. NTAB5 löschen.
Eingabe-Vektor in VREG und EREG laden

**FIG 9A**

Schon Neuronen in NTAB eingegeben?    N

J

Für alle Neuronen in NTAB
Erregung ermitteln

Maximale Erregung < ESchwellwert?    J

N

Neues Neuron mit Eingabegewicht entsprechend den Komponenten des Eingabevektors in NTAB eintragen mit
Erregung = 1 und  Masse = 0

Das am stärksten erregte Neuron der noch
nicht in ATAB eingetragenen Neuronen aus
NTAB in ATAB eintragen

‖ AUSGABE1 ‖

Lern-Takt vom übergeordneten Netz?    J

N

J    Bereits alle Neuronen aus NTAB in ATAB eingetragen?

N

N    Bereits alle Neuronen aus ATAB ausgelesen?

J

**B**

EP 0 727 748 A1

Ⓑ

# FIG 9B

Die Eingangsgewichte und die Masse des ersten in ATAB eingetragenen Neurons (also mit maximaler Erregung) aus NTAB lesen und in NREG laden. Die Komponenten des vom Mittelwert-Vektor-Erzeuger erzeugten Mittelwert-Vektors als neue Gewichte für dieses Neuron in NTAB speichern und seine Masse um DM erhöhen.

Meldung an das übergeordnete Netz, daß der Lernvorgang beendet ist.

< Steuer-Takt vom übergeordneten Netz zur Erzeugung eines Mittelwert-Vektors? > N

J

Die Gewichte des Neurons, dessen Nummer vom übergeordneten Netz geliefert wird, aus NTAB lesen und in NREG1 und NREG2 laden. Die vom übergeordneten Netz gelieferte Masse nach NREG3 laden. Die Komponenten des vom Mittelwert-Vektor-Erzeuger ausgegebenen Mittelwert-Vektors in EREG laden. Einträge in NTAB4 und in ATAB löschen.

Für alle Neuronen in NTAB Erregung ermitteln

Das am stärksten erregte Neuron der noch nicht in ATAB eingetragenen Neuronen aus NTAB in ATAB eintragen

| AUSGABE1 |

J < Steuertakt vom übergeordneten Netz zur Erzeugung eines Mittelwert-Vektors? >

N

< Steuertakt für den nächsten Eingabe-Vektor? > N

Ⓐ ◄ J

< Bereits alle Neuronen aus NTAB in ATAB eingetragen? > J

N

< Bereits alle Neuronen aus ATAB ausgelesen? > N

J

20

# FIG 10

START AUSGABE1

Fordert das übergeordnete Netz das nächste hoch erregte Neuron an?  N

J

Bereits alle in ATAB eingetragenen Neuronen an das übergeordnete Netz ausgegeben?  J

N

Die Nummer des nächsten hoch erregten Neurons aus ATAB zusammen mit seiner Erregung zum übergeordneten Netz übertragen.

Neuronennummer 0 und Erregung = -1 an das übergeordnete Netz übertragen.

Fordert das übergeordnete Netz die Höhe der Erregung eines bestimmten Neurons an?  N

J

Höhe der Erregung des gewünschten Neurons aus NTAB auslesen und zum übergeordneten Netz übertragen.

Fortsetzung von NN1-ST

**FIG 11A**

START NN2-ST

(A)

Gesamte Tabelle NTAB4 auf -1 setzen.
Gesamte Tabelle NTAB5 auf 0 setzen.
Alle Einträge in Tabelle ATAB löschen.

ZMARK=0 , ZAUS=0 , MERKER=0

Ist dies das Netz der obersten Stufe? — J

N

Nächster Eingabetakt ET1 vom übergeordneten Netz? — N

J

Eingabetakt ET1 über Ausgang AT1 an linkes und rechtes untergeordnetes Netz senden

Ermittlung der Neuronen mit hoher Erregung

Ist dies das Netz der obersten Stufe? — N

J

Ergebnisausgabe

Lern-Takt LT von der übergeordneten Stufe? — N

J

Lern-Takt an linkes und rechtes direkt untergeordnetes Netz und warten, bis beide Netze den erfolgreichen Abschluß des Lernvorgangs für ihre maximal erregten Neuronen zurückgemeldet haben.

(B)

# FIG 11B

(B)

Ist das lernende (also maximal erregte) Neuron des eigenen Netzes mit seinen Eingängen mit Neuronen verbunden, die innerhalb ihrer Netze am meisten erregt sind?  **J**

**N**

Erregung des maximal erregten Neurons < E-Schwellwert?  **J**

**N**

Die Masse des lernenden Neurons um DM erhöhen

Steuertakt an beide untergeordneten Netze: Erzeuge Mittelwert-Vektor mit der Neuronenmasse des maximal erregten Neurons des eigenen Netzes und verarbeiten

Erstes Neuron mit maximaler Erregung aus ATAB im linken untergeordneten Netz anfordern und in EREG1 speichern

Zweites Neuron mit maximaler Erregung aus ATAB im rechten untergeordneten Netz anfordernund in EREG3 speichern

Neuronen mit maximaler Erregung aus eigener ATAB (noch von der Analyse des ursprünglichen Eingabevektors) mit 1. und 2. Neuron aus EREG in NTAB eintragen und seine Masse um DM erhöhen.

Neues Neuron in NTAB einfügen und die Nummern der Neuronen, die mit den Eingängen des neuen Neurons verbunden sind, für dieses neue Neuron aus NRR1 und NRR2 in NTAB speichern. Die Erregung für diese Neuronen vom linken und rechten untergeordneten Netz anfordern und ihre Summe als Erregung in NTAB speichern und als seine Masse den Wert DM in NTAB speichern.

(C)

# FIG 11C

(C)

Ist dies das Netz der obersten Stufe? — J

N

Meldung an das übergeordnete Netz, daß Lernen ausgeführt.

Eingabetakt ET1 für das Einlesen der Eingabevektoren des nächsten Musters erzeugen und über AT1 ausgeben.

Steuertakt vom übergeordneten Netz: Mittelwertvektoren erzeugen und diese verarbeiten? — N

J

Aufsuchen des in NTAB eingetragenen Neurons, dessen Nummer vom übergeordneten Netz geliefert wird und lesen der Nummern der Neuronen, mit denen seine Eingänge verbunden sind. Steuertakt an linkes untergeordnetes Netz: Erzeuge Mittelwert-Vektor mit der ersten aus NTAB gelesenen Neuronnummer und der Neuron-Masse, die vom übergeordneten Netz geliefert wird, und verarbeiten. Steuertakt an rechtes untergeordnetes Netz: Erzeuge Mittelwert-Vektoren mit der zweiten aus NTAB gelesenen Neuronnummer und der gleichen Masse und verarbeiten.

Ermittlung der Neuronen mit hoher Erregung

J

Steuertakt vom übergeordneten Netz: Mittelwertvektoren erzeugen und diese verarbeiten?

N

Eingabetakt für den nächsten Eingabevektor? — N

J

Sind bereits alle Neuronen aus NTAB in ATAB eingetragen? — J

N

Sind bereits alle Neuronen bis zur Marke aus ATAB ausgelesen? — N

J

(A)

**FIG 12A**

START Ermittlung der Neuronen
mit hoher Erregung

(A)

Merker < 2 ?  N

J

Vom linken untergeordneten Netz die Nummer und die Erregung des
nächsten hoch erregten Neurons anfordern und in EREG1 und EREG2
laden. Falls es sich um das erste vom linken untergeordneten Netz angeforderte Neuron handelt, dies zusätzlich in NRR1 laden.

N   Merker = 0 ?

J

Vom rechten untergeordneten Netz die Nummer und die Erregung des
nächsten hoch erregten Neurons anfordern und in EREG3 und EREG4
laden. Falls es sich um das erste vom rechten untergeordneten Netz
angeforderte Neuron handelt, dies zusätzlich in NRR2 laden.

Die Summe von EREG2 und EREG4
in MAXSUM laden.

Sind schon Neuronen
in NTAB gespeichert?  J

N

Neues Neuron in NTAB einfügen und die Nummern der Neuronen, die
mit den Eingängen des neuen Neurons verbunden sind, für dieses
neue Neuron aus EREG1 und EREG3 in NTAB speichern. Die Summe
von EREG2 und EREG4 als Erregung für dieses Neuron in NTAB
speichern und als seine Masse den Wert 0 in NTAB speichern.

Sind die beiden in EREG geladenen Neuronennummern = 0 ?  J

N

(B)          (D)

**B**

# FIG 12B

Ist die erste in EREG gespeicherte Erregung größer als die zweite in EREG gespeicherte Erregung? → **N** → **C**

Merker = 1

**J**

Die nächste Zeile in NTAB1 aufsuchen, in der die gleiche Neuronnummer wie in EREG1 enthalten ist.

Ist die nächste Zeile in NTAB1 gefunden, die diese Nummer enthält? → **N**

**J**

Ist die Erregung des Neurons, das dieser Zeilennummer in NTAB entspricht, bereits in NTAB4 gespeichert? → **J**

**N**

Die Höhe der Erregung des Neurons, dessen Nummer in der aufgefundenen Zeile in NTAB2 steht, vom rechten untergeordneten Netz anfordern und warten, bis sie geliefert worden ist. Dann wird sie in ERR2 geladen.

Diese Erregung mit der in EREG2 gespeicherten Erregung addieren und die Summe in der aufgefundenen Zeile in NTAB4 speichern.

Die Nummer der aufgefundenen Zeile als Neuron-Nummer und die nun ermittelte Erregung in ATAB einfügen und zwar in nach Höhe der Erregung absteigender Reihenfolge sortiert.

**D**

# FIG 12C

C

Merker = 2

J

Die nächste Zeile in NTAB2 aufsuchen, in der die Neuronnummer wie in EREG3 enthalten ist.

Ist die nächste Zeile in
NTAB2 gefunden, die
diese Nummer enthält? — N

J

Ist die Erregung des Neurons,
das dieser Zeilennummer in
NTAB entspricht, bereits in
NTAB4 gespeichert? — J

N

Die Höhe der Erregung des Neurons, dessen Nummer in
der aufgefundenen Zeile in NTAB1 steht, vom linken
untergeordneten Netz anfordern und warten, bis sie geliefert worden ist.

Diese Erregung mit der in EREG4 gespeicherten Erregung
addieren und die Summe in der aufgefundenen Zeile in
NTAB4 speichern.

Die Nummer der aufgefundenen Zeile als Neuron-Nummer
und die nun ermittelte Erregung in ATAB einfügen und
zwar in nach Höhe der Erregung absteigender Reihenfolge
sortiert.

D

**FIG 12D**

D

MARKE die höchste Zeilennummer von ATAB zuweisen, bei
der Erregung >= MAXSUM ist.

Hat MARKE einen höheren Wert als
die Nummer der zuletzt ausgegebenen
Zeile von ATAB ?   N

J

|| AUSGABE2 ||

A

Fortsetzung
von NN2- ST

FIG 13

( START AUSGABE2 )

Fordert das übergeordnete Netz das
nächste hoch erregte Neuron an? — **N**

**J**

Sind bereits alle Neuronen, deren Zeilennummer nicht größer als die in MARKE geladene Nummer ist, aus ATAB ausgelesen? — **J**

**N**

Die Nummer des nächsten hoch
erregten Neurons aus ATAB
zusammen mit seiner Erregung zum
übergeordneten Netz übertragen.

Neuronennummer 0
und Erregung = -1
an das übergeordnete
Netz übertragen.

Fordert das übergeordnete Netz die Höhe der
Erregung eines bestimmten Neurons an? — **N**

**J**

Ist die Erregung für dieses bestimmte Neuron
schon ermittelt und in NTAB4 gespeichert? — **J**

**N**

Die Höhe der Erregung der Neuronen, deren Ausgänge mit
den Eingängen des bestimmten Neurons verbunden sind,
vom linken und rechten untergeordneten Netz anfordern.

Erregung
an das
übergeordnete Netz
übertragen

Sind die angeforderten Erregungen von den beiden
untergeordneten Netzen geliefert worden? — **N**

**J**

Die Summe der beiden Erregungen bilden. Diese Summe
als Erregung für das bestimmte Neuron wie angefordert
zum übergeordneten Netz übertragen und für dieses
Neuron in NTAB4 speichern

Fortsetzung von: Ermittlung der
Neuronen mit hoher Erregung

29

**Europäisches Patentamt**

# EUROPÄISCHER RECHERCHENBERICHT

Nummer der Anmeldung

EP 95 10 2265

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | EP-A-0 459 276 (YOZAN INC) 4.Dezember 1991<br>* das ganze Dokument *<br>--- | 1,6 | G06F15/80 |
| Y | PROCEEDINGS OF THE INTERNATIONAL CONFERENCE ON NEURAL NETWORKS, PARIS, JULY 9 - 13, 1990,<br>Bd. 2, 9.Juli 1990 INSTITUTE OF ELECTRICAL AND ELECTRONICS ENGINEERS,<br>Seiten 761-764, XP 000145402<br>ETHEM ALPAYDIN 'GROW-AND-LEARN: AN INCREMENTAL METHOD FOR CATEGORY LEARNING GROW-AND-LEARN: AN INCREMENTAL METHOD FOR CATEGORY LEARNING'<br>* das ganze Dokument *<br>--- | 1,6 | |
| A | PROCEEDINGS OF THE INTERNATIONAL JOINT CONFERENCE ON NEURAL NETWORK (IJCNN), SEATTLE, JULY 8 - 12, 1991,<br>Bd. 1, 8.Juli 1991 INSTITUTE OF ELECTRICAL AND ELECTRONICS ENGINEERS,<br>Seiten 263-268, XP 000238303<br>ZHEN-PING LO ET AL 'A NEURAL P1ECEWISE LINEAR CLASSIFIER FOR PATTERN CLASSIFICATION'<br>* das ganze Dokument *<br>--- | 1,6 | |
| A | IEEE TRANSACTIONS ON COMPUTERS,<br>Bd. 42, Nr. 3, 1.März 1993<br>Seiten 291-299, XP 000364322<br>SANKAR A ET AL 'GROWING AND PRUNING NEURAL TREE NETWORKS'<br>* Seite 291, linke Spalte, Zeile 1 - Seite 296, rechte Spalte, Zeile 35; Abbildungen 1-5 *<br>---<br>-/-- | 1,6 | |

**RECHERCHIERTE SACHGEBIETE (Int.Cl.6)**

G06F

Der vorliegende Recherchenbericht wurde für alle Patentansprüche erstellt

| Recherchenort | Abschlußdatum der Recherche | Prüfer |
|---|---|---|
| DEN HAAG | 17.Juli 1995 | Schenkels, P |

Europäisches
Patentamt

# EUROPÄISCHER RECHERCHENBERICHT

Nummer der Anmeldung

EP 95 10 2265

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | PROCEEDINGS OF THE INTERNATIONAL CONFERENCE ON NEURAL NETWORKS (ICN, SAN FRANCISCO, MAR. 28 - APR. 1, 1993, Bd. 1, 28.März 1993 INSTITUTE OF ELECTRICAL AND ELECTRONICS ENGINEERS, Seiten 444-449, XP 000366817 TSENG H C ET AL 'SCALABILITY IN NEURAL NETWORK DESIGN: AN ADD-ON SCHEME' * Zusammenfassung * ----- | 1,6 | |
| | | | **RECHERCHIERTE SACHGEBIETE (Int.Cl.6)** |

Der vorliegende Recherchenbericht wurde für alle Patentansprüche erstellt

| Recherchenort | Abschlußdatum der Recherche | Prüfer |
|---|---|---|
| DEN HAAG | 17.Juli 1995 | Schenkels, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P04C03)